# EUROPÄISCHE PATENTSCHRIFT

(11) **EP 4 514 498 B1**
(45) Veröffentlichungstag und Bekanntmachung des Hinweises auf die Patenterteilung: **18.11.2026**
(21) Anmeldenummer: 23722839.0
(22) Anmeldetag: 24.04.2023
(51) Int. Cl.: B01D 29/21, B01D 29/23, B01D 29/58

(54) **ANORDNUNG MIT EINEM FILTERELEMENT UND EINEM LADUNGSAUFNAHMEELEMENT, FILTEREINRICHTUNG, TANKSYSTEM UND VERFAHREN**
ARRANGEMENT WITH A FILTER ELEMENT AND A CHARGE ABSORBING ELEMENT, FILTER DEVICE, TANK SYSTEM, AND METHOD
AGENCEMENT COMPRENANT UN ÉLÉMENT FILTRANT ET UN ÉLÉMENT D'ABSORPTION DE CHARGE, DISPOSITIF DE FILTRATION, SYSTÈME DE RÉSERVOIR, ET PROCÉDÉ

(30) Priorität: 25.04.2022 DE 102022109862
(43) Veröffentlichungstag der Anmeldung: 05.03.2025
(73) Patentinhaber: Argo-Hytos Group AG, 6340 Baar (CH)
(72) Erfinder: TRUNNER, Daniel, 76703 Kraichtal (DE); WEIDEMANN, Roman, 76684 Östringen (DE); MAX, Patrice, 76703 Kraichtal (DE); STIEGELE, Roberto, 74889 Sinsheim (DE); BAUMANN, Matthias, 76676 Graben-Neudorf (DE); WENDEL, Tobias, 76669 Bad Schönborn (DE); WEISER, Thomas, 69231 Rauenberg (DE); SPECK, Timo, 69115 Heidelberg (DE)
(74) Vertreter: Meissner Bolte Partnerschaft mbB
(86) Internationale Anmeldenummer: PCT/EP2023/060565
(87) Internationale Veröffentlichungsnummer: WO 2023/208799

(56) Entgegenhaltungen:
- US-A- 5 830 371

## Beschreibung

Die Erfindung betrifft eine Anordnung mit einem Filterelement und einem Ladungsaufnahmeelement, eine Filtereinrichtung und ein Tanksystem mit einer solchen Anordnung sowie ein Verfahren zum Ladungsausgleich zwischen einem Filterelement und einer Flüssigkeit. Eine Anordnung nach dem Oberbegriff des Patentanspruchs 1 ist beispielsweise aus der WO 2021/055246 A1 bekannt.

Im Bereich von mobilen Arbeitsmaschinen, wie beispielsweise Baumaschinen, landwirtschaftlichen Maschinen und dergleichen, wird verstärkt angestrebt, die Energieeffizienz zu steigern, die Emissionswerte zu senken sowie den Bedienkomfort zu erhöhen. Darüber hinaus spielt die Kosteneffizienz von der Entwicklung bis hin zur Montage solcher Maschinen eine große Rolle. Dies stellt somit erhöhte Anforderungen an Hydrauliksysteme, die in den Arbeitsmaschinen zum Einsatz kommen.

Derartige Hydrauliksysteme sind häufig mit einem Hydrauliktank und einer Filtereinrichtung ausgestattet, um Hydrauliköl zu filtern und das filtrierte Hydrauliköl nachgeschalteten Komponenten bereitzustellen. Bei dem Betrieb dieser Hydrauliksysteme ergibt sich das Problem, dass bei der Filtration des Hydrauliköls eine Ladungstrennung zwischen dem Öl und einem Filterelement der Filtereinrichtung erfolgt. Konkret findet die Ladungstrennung an einer Filterlagenoberfläche des Filterelements statt. Die Filterlagenoberfläche und das Hydrauliköl laden sich dabei entgegengesetzt auf. Generell gilt, je höher die Geschwindigkeit, mit der das Öl das Filterelement durchströmt, desto höher ist die elektrische Aufladung des Öls sowie des Filterelements. In der Vergangenheit stellte dies kein großes Problem dar, da die verwendeten Hydrauliköle erhöht elektrisch Leitfähigkeit waren. Da nunmehr an Hydrauliköle generell erhöhte Qualitäts- und Umweltanforderungen gestellt werden, kommen vorwiegend Hydrauliköle mit geringerer Leitfähigkeit zum Einsatz. Dies hat den Nachteil, dass das Hydrauliköl den Aufladevorgang selbst nicht mehr kompensieren kann und stark aufgeladen wird. Das stark aufgeladene Öl hat zur Folge, dass sich ein unerwünschtes elektrisches Feld in dem Hydrauliktank bildet, das beispielsweise umliegende Elektronikkomponenten negativ beeinflussen oder sogar zerstören kann.

Aus dem Stand der Technik sind vielseitige Lösungsansätze bekannt, um die Aufladung von Hydraulikkomponenten zu verhindern. Beispielsweise ist in der eingangs genannten WO 2021/055246 A1 ein Filterelement beschrieben, bei dem ein Ausgleichen der Ladungstrennung an der Filterlagenoberfläche durch einen Stromkreis zwischen einem Stützrohr und der Filterlage erfolgt. Dadurch wird im Wesentlichen eine Elektroneutralität des Filterelements als solches erreicht. Nachteilig ist hier allerdings, dass lediglich die Aufladung des Filterelements verhindert bzw. verringert wird, nicht aber die Aufladung des Öls.

Des Weiteren beschreibt die US 5 830 371 A ein Filterelement mit zwei konzentrisch angeordneten zylindrischen Wänden, die jeweils an Filterringen befestigt sind. Die Wände sind aus einem Netz gebildet, das beispielsweise aus Metalldraht gewebt ist. Die Filterringe sind aus einem formbaren Material wie Kunststoff oder Gummi hergestellt, das eine öldichte Dichtung zwischen dem inneren Filterring und dem äußeren Filterring bildet. Alternativ wird angegeben, dass die Filterringe aus Metall sein können.

Der Erfindung liegt daher die Aufgabe zu Grunde, eine Anordnung bereitzustellen, welche ein Ausgleichen einer Ladungstrennung zwischen einer filtrierten Flüssigkeit und einem Filterelement ermöglicht, wodurch die Aufladung der Flüssigkeit und die Stärke eines elektrischen Feldes verringert sind. Der Erfindung liegt ferner die Aufgabe zu Grunde eine Filtereinrichtung, ein Tanksystem und ein Verfahren zum Ladungsausgleich anzugeben.

Erfindungsgemäß wird diese Aufgabe im Hinblick auf die Anordnung durch den Gegenstand des Anspruchs 1 gelöst. Hinsichtlich der Filtereinrichtung, des Tanksystems und des Verfahrens wird die vorstehend genannte Aufgabe jeweils durch den Gegenstand des Anspruchs 10 (Filtereinrichtung), des Anspruchs 13 (Tanksystem) und des Anspruchs 15 (Verfahren) gelöst.

Konkret wird die Aufgabe durch eine Anordnung mit einem Filterelement zur Filtration einer Flüssigkeit, insbesondere von Hydrauliköl, und wenigstens einem Ladungsaufnahmeelement zur Aufnahme elektrisch geladener Teilchen der Flüssigkeit gelöst. Das Filterelement und das Ladungsaufnahmeelement sind elektrisch leitfähig. Das Filterelement weist wenigstens eine Filterlage mit einer Filterlagenoberfläche auf. Die Filterlagenoberfläche und das Ladungsaufnahmeelement sind von der Flüssigkeit durchströmbar. An der Filterlagenoberfläche erfolgt beim Durchströmen eine Ladungstrennung.

Erfindungsgemäß ist das Ladungsaufnahmeelement mit dem Filterelement derart elektrisch verbunden, dass im Betrieb zwischen dem Ladungsaufnahmeelement und der Filterlagenoberfläche ein Ausgleichen der Ladungstrennung stattfindet, wobei das Ladungsaufnahmeelement dem Filterelement in Strömungsrichtung nachgeschaltet ist.

Die Erfindung hat den Vorteil, dass die Ladungstrennung, die bei dem Durchströmen der Flüssigkeit durch die Filterlage an der Filterlagenoberfläche stattfindet, wieder ausgeglichen wird. Dadurch wird die elektrostatische Aufladung des Filterelements sowie der Flüssigkeit erheblich verringert oder sogar verhindert. Dies hat den großen Vorteil, dass sich lediglich ein elektrisches Feld mit sehr geringer Stärke zwischen dem Filterelement und der Flüssigkeit ausbildet. Es ist allgemein bekannt, dass starke elektrische Felder Elektronikkomponenten negativ beeinflussen bzw. zerstören können. Durch die erfindungsgemäße Anordnung eines Filterelements und eines Ladungsaufnahmeelements wird dies verhindert. Vorteilhaft können dadurch zusätzliche Abschirmungen zum Schutz von Elektronikkomponenten entfallen, sodass Kosten eingespart werden.

Im Gebrauch der Anordnung strömt eine zu filtrierende Flüssigkeit durch die Filterlage des Filterelements. Bei dem Durchströmen der Flüssigkeit durch die Filterlage erfolgt an der Filterlagenoberfläche eine Ladungstrennung. Dabei laden sich die Filterlagenoberfläche und die Flüssigkeit entgegengesetzt auf. Beispielsweise kann die Filterlagenoberfläche negativ geladen sein, d.h. einen Elektronenüberschuss aufweisen, und die filtrierte Flüssigkeit positiv geladen sein, d.h. einen Elektronenmangel aufweisen. Es ist alternativ möglich, dass durch die Ladungstrennung die Filterlagenoberfläche positiv geladen und die Flüssigkeit negativ geladen ist. Je nach entsprechender Ladung weisen die Filterlagenoberfläche und die Flüssigkeit eine jeweilige entgegengesetzte Polarität auf. Ladungsträger in der Flüssigkeit sind Ionen.

Nach dem Durchströmen tritt die filtrierte und aufgeladene Flüssigkeit aus der Filterlage aus. Dazu weist das Filterelement eine Abströmseite auf, die Teil der Filterlage ist. Die aufgeladene Flüssigkeit strömt nach dem Filterelement in ein Ladungsaufnahmeelement, das mit dem Filterelement elektrisch gekoppelt ist.

Da die Filterlagenoberfläche und die Flüssigkeit entgegengesetzt geladen sind, besteht zwischen diesen ein erhöhter Potentialunterschied. Bevorzugt weisen die Filterlagenoberfläche und die Flüssigkeit einen gleichen Ladungswert unterschiedlicher Vorzeichen auf. Mit anderen Worten entspricht ein Ladungswert der Ladung der Filterlagenoberfläche einem Ladungswert der Flüssigkeit, wobei die beiden Ladungswerte entgegengesetzte Vorzeichen aufweisen. Im Rahmen der Erfindung erzeugen die entgegengesetzten Aufladungen ein elektrostatisches Feld, bei dem die Feldstärke in der Einheit Kilovolt (kV) angegeben wird.

Aufgrund des hohen Potentialunterschieds zwischen der Filterlagenoberfläche und der Flüssigkeit gibt die Flüssigkeit geladene Teilchen an das Ladungsaufnahmeelement ab oder nimmt geladene Teilchen von dem Ladungsaufnahmeelement auf. Dies ist abhängig von der Polarität der aufgeladenen Filterlagenoberfläche und der aufgeladenen Flüssigkeit. Je nach Polarität werden diese geladenen Teilchen durch die elektrische Verbindung zwischen dem Filterelement und dem Ladungsaufnahmeelement transportiert, sodass ein Ausgleichen der Ladungstrennung erfolgt. Konkret werden zum Ausgleichen der Ladungstrennung Elektronen zwischen der Filterlagenoberfläche und dem Ladungsaufnahmeelement bewegt. Durch die Oberflächenpaarung "Flüssigkeit/Ladungsaufnahmeelement" und die elektrisch leitende Verbindung zwischen dem Ladungsaufnahmeelement und dem Filterelement können Ladungen zum Ausgleichen der Ladungstrennung zwischen der Filterlagenoberfläche und der Flüssigkeit hin und her wandern.

Das Ladungsaufnahmeelement ist vorzugsweise vollständig elektrisch leitfähig. Alternativ kann das Ladungsaufnahmeelement abschnittsweise elektrisch leitfähig sein. Das Ladungsaufnahmeelement dient zum Aufnehmen von Ladungen aus der Flüssigkeit und/oder zum Abgeben von Ladungen an die Flüssigkeit. Das Ladungsaufnahmeelement bildet somit wenigstens ein Mittel zur Ladungsübertragung. Das Ladungsaufnahmeelement wird im Betrieb von der Flüssigkeit in Strömungsrichtung nach dem Filterelement durchströmt. Das Ladungsaufnahmeelement stellt bevorzugt wenigstens eine Kontaktfläche für die Flüssigkeit bereit, um Ladungen von der Flüssigkeit aufzunehmen oder Ladungen an die Flüssigkeit abzugeben. Die wenigstens eine Kontaktfläche ist bevorzugt elektrisch leitfähig. Besonders bevorzugt ist das Ladungsaufnahmeelement so ausgebildet, dass die Flüssigkeit vor dem Austritt mit einer Vielzahl von Kontaktflächen des Ladungsaufnahmeelements zum Ladungsausgleich in Kontakt tritt.

Das Ladungsaufnahmeelement umfasst vorzugsweise einen Eintritts- und einen Austrittsbereich für die filtrierte Flüssigkeit. Das Ladungsaufnahmeelement ist vorzugsweise so ausgebildet, dass wenigstens ein Strömungsweg zwischen dem Eintrittsbereich und dem Austrittsbereich eine Länge aufweist, die länger als ein kürzester Strömungsweg zwischen dem Eintritts- und Austrittsbereich ist. Mit anderen Worten ist das Ladungsaufnahmeelement so ausgebildet, dass ein Strömungsweg zwischen dem Eintritts- und Austrittsbereich in Bezug auf einen minimalen Strömungsweg verlängert ist. Vorzugsweise befindet sich die wenigstens eine Kontaktoberfläche, insbesondere befinden sich die Vielzahl von Kontaktoberflächen, zwischen dem Eintritts- und Austrittsbereich. Hier ist vorteilhaft, dass die Verweilzeit in dem Ladungsaufnahmeelement und somit die Kontaktzeit der aufgeladenen Flüssigkeit mit den leitfähigen Kontaktoberflächen erhöht ist und dadurch ein möglichst vollständiger Ausgleich der Ladungstrennung stattfinden kann.

Das Ladungsaufnahmeelement ist bevorzugt ein von dem Filterelement, insbesondere der Filterlage, unabhängiges Element. Mit anderen Worten ist das Ladungsaufnahmeelement bevorzugt von dem Filterelement, insbesondere der Filterlage baulich getrennt.

Im Rahmen der Erfindung ist zu verstehen, dass nicht jede Komponente des Filterelements elektrisch leitfähig sein muss. Es ist wenigstens jener Bestandteil des Filterelements elektrisch leitfähig, der mit der Filterlagenoberfläche und dem Ladungsaufnahmeelement zum Ladungsausgleich elektrisch verbunden ist und mit der Filterlagenoberfläche leitend in Kontakt steht. Der Kontakt kann dabei unmittelbar oder mittelbar sein.

Beispielsweise kann wenigstens eine Endscheibe leitfähig sein, die mit der Filterlagenoberfläche in Kontakt steht und mit dem Ladungsaufnahmeelement elektrisch verbunden ist. Zusätzlich oder alternativ kann die Anordnung wenigstens ein separates leitfähiges Bauteil, insbesondere wenigstens eine elektrische Leitung, aufweisen, das die Filterlagenoberfläche und das Ladungsaufnahmeelement zum Ladungsausgleich elektrisch verbindet. Das separate Bauteil kann unabhängig von den Bestandteilen des Filterelements die Filterlagenoberfläche und das Ladungsaufnahmeelement elektrisch verbinden. Es ist möglich, dass in diesem Fall das Filterelement vollständig nicht-leitend ist.

Alternativ oder zusätzlich kann ein separates leitfähiges Bauteil vorgesehen sein, das mit zumindest einer leitfähigen Komponente, beispielsweise einer Endscheibe und/oder einem Stützelement, des Filterelements und dem Ladungsaufnahmeelement elektrisch leitend verbunden ist. Dies setzt voraus, dass die leitfähige Komponente(n) mit der Filterlage und somit der Filterlagenoberfläche zur Ladungsübertragung leitend gekoppelt sind.

Die Filterlage kann elektrisch nicht-leitfähig sein. Es ist möglich, dass die Filterlage wenigstens einen elektrisch leitfähigen Abschnitt aufweist. Der elektrisch leitfähige Abschnitt kann wenigstens einen leitfähigen Faden, insbesondere mehrere leitfähige Fäden, aufweisen.

Die Filterlage dient zum Filtern, d.h. zum Entfernen, von Fremdstoffen aus der Flüssigkeit. Die Filterlage kann einlagig oder mehrlagig sein. Die Filterlage kann wenigstens eine Gewebelage umfassen. Bevorzugt weist die Filterlage mehrere Gewebelagen auf. Zusätzlich oder alternativ kann die Filterlage wenigstens eine Vlieslage umfassen. Andere Lagenarten sind möglich.

Auf der Abströmseite des Filterelements kann wenigstens ein Stützelement, insbesondere ein Stützrohr, angeordnet sein, das die Filterlage des Filterelements gegen die Strömungsrichtung der Flüssigkeit abstützt. Das Stützelement ist vorzugsweise eine Lochzarge. Das Stützelement kann zumindest abschnittsweise, insbesondere vollständig, elektrisch leitfähig sein. In diesem Fall steht der elektrisch leitfähige Bereich des Stützelements mit der Filterlagenoberfläche der Filterlage zum Ladungstransfer in Kontakt. Das Stützelement ist bevorzugt aus Metall gebildet. Alternativ ist es möglich, dass das Stützelement zumindest teilweise nicht-leitend ausgebildet ist.

Besonders bevorzugt kommt die Anordnung in Filtereinrichtungen zur Filtration von Hydrauliköl zum Einsatz. Insbesondere in der Mobilhydraulik, bspw. in Arbeitsmaschinen wie Baumaschinen, landwirtschaftlichen Maschinen oder dergleichen, findet die erfindungsgemäße Anordnung in Filtereinrichtungen und/oder in Kombination mit Tanksystemen ihre Anwendung. Generell kann die erfindungsgemäße Anordnung in Filtereinrichtung zur Filtration von Fluiden, d.h. von Gasen und weiteren Flüssigkeiten zum Einsatz kommen. Andere Anwendungsgebiete sind möglich.

Bevorzugte Ausführungsformen der Erfindung sind in den Unteransprüchen angegeben.

Bei einer besonders bevorzugten Ausführungsform weist das Ladungsaufnahmeelement eine Vielzahl von Oberflächenabschnitten auf, die im Betrieb elektrisch geladene Teilchen von der Flüssigkeit aufnehmen und/oder an die Flüssigkeit abgeben, wobei die Oberflächenabschnitte in Strömungsrichtung zumindest abschnittsweise aufeinanderfolgend angeordnet sind. Mit anderen Worten können die Oberflächenabschnitte in Strömungsrichtung zumindest teilweise voneinander versetzt sein. Die Oberflächenabschnitte können voneinander separiert sein oder zumindest teilweise aneinander angrenzen. Es ist möglich, dass die Oberflächenabschnitte aneinandergereiht sind. Die Oberflächenabschnitte können eine gemeinsame durchgängige Oberfläche, insbesondere Kontaktoberfläche bilden. Generell bilden die Oberflächenabschnitte Kontaktflächen für die Flüssigkeit zur Aufnahme und/oder Abgabe von elektrischen Ladungen. Die Oberflächenabschnitte sind elektrisch leitfähig. In Summe stellen die Oberflächenabschnitte eine großflächige Kontaktfläche für die aufgeladene Flüssigkeit bereit. Dadurch erfolgt eine möglichst effiziente Ladungsübertragung zwischen dem Ladungsaufnahmeelement und der Flüssigkeit. Dies begünstig maßgeblich den Wirkungsgrad des Ladungsausgleiches zwischen dem Filterelement und der Flüssigkeit.

Erfindungsgemäß weist das Ladungsaufnahmeelement wenigstens eine elektrisch leitfähige Materialstruktur auf, die aus einer Vielzahl von in Strömungsrichtung zumindest abschnittsweise aufeinanderfolgenden Zellen gebildet ist. Mit anderen Worten weist das Ladungsaufnahmeelement eine Vielzahl von Zellen auf, die im Betrieb von der aufgeladenen Flüssigkeit durchströmt werden. Die Materialstruktur ist bevorzugt dreidimensional ausgebildet. Die Zellen sind vorteilhaft in Strömungsrichtung voneinander versetzt, sodass ein möglichst langer Strömungsweg der Flüssigkeit durch das Ladungsaufnahmeelement realisiert ist.

Bei einer weiteren bevorzugten Ausführungsform weisen die Zellen mehrere Zellenstege auf, die jeweils wenigstens einen Oberflächenabschnitt, insbesondere wenigstens einen der Vielzahl von Oberflächenabschnitten, aufweisen, der im Betrieb Ladungen aus der Flüssigkeit aufnimmt oder an diese abgibt. Die Zellenstege können einer Schaumstruktur oder einer fasrigen Struktur sein. Die Zellenstege können willkürlich oder gezielt ausgerichtet sein. Die Zellenstege sind Teil des Ladungsaufnahmeelements und somit elektrisch leitfähig. Die Zellenstege können im Querschnitt kreisförmig ausgebildet sein, d.h. einen zylindrischen Oberflächenabschnitt aufweisen. Alternativ oder zusätzlich können die Zellenstege einen eckigen Querschnitt aufweisen. Hier weisen die Zellenstege wenigstens zwei Oberflächenabschnitte auf. Bei dieser Ausführungsform ist vorteilhaft, dass aufgrund Vielzahl von Zellenstegen eine vergrößerte Kontaktoberfläche für die geladene Flüssigkeit bereitgestellt ist.

Bevorzugt ist die elektrisch leitfähige Materialstruktur eine dreidimensionale Matrixstruktur. Mit anderen Worten ist die elektrische leitfähige Materialstruktur vorzugsweise eine Volumenstruktur mit einer Materialmatrix. Es ist möglich, dass die Materialstruktur aus wenigstens einer Materiallage, insbesondere Materialschicht gebildet ist. Die Materialstruktur kann aus einem einzigen Material gebildet sein. Die Materialstruktur kann daher einstückig sein. Alternativ kann die Materialstruktur mehrlagig sein.

Weiter bevorzugt weist das Ladungsaufnahmeelement eine dreidimensionale Außenkontur auf, die wenigstens einen durchströmbaren Innenraum begrenzt, der durch die elektrisch leitfähige Materialstruktur zum Aufnehmen/Abgeben von elektrisch geladenen Teilchen zumindest teilweise, insbesondere vollständig, ausgefüllt ist. Dieser Innenraum kann durch die Vielzahl von Zellen gebildet sein. Es ist aber auch denkbar, dass der Innenraum durch eine Vielzahl von Fasern und/oder Fäden ausgefüllt ist. Die elektrisch leitfähige Materialstruktur kann daher aus wenigstens einem dreidimensionalen Gewebe gebildet sein. Alternativ oder zusätzlich kann die Materialstruktur aus wenigstens einem dreidimensionalen Gitter gebildet sein. Weiter alternativ oder zusätzlich kann die Materialstruktur aus wenigstens einem offenporigen Schaum, insbesondere Kunststoffschaum oder Metallschaum gebildet sein. In einer Ausführungsform kann die Materialstruktur, aus einem 3D-Druck-Material gebildet sein. Das Ladungsaufnahmeelement ist vielseitig konfigurierbar. Das Ladungsaufnahmeelement ist somit vorteilhaft anforderungsspezifisch auslegbar.

Bei einer bevorzugten Ausführungsform weist das Ladungsaufnahmeelement eine Länge auf, die von 20 mm bis 250 mm beträgt und/oder die elektrisch leitfähige Materialstruktur eine Porenanzahl pro Zoll von mindestens 5 bis 30 Poren auf. Das Ladungsaufnahmeelement kann eine Länge aufweisen, die von 40 mm bis 200 mm beträgt. Konkreter kann das Ladungsaufnahmeelement eine Länge aufweisen, die von 60 mm bis 150 mm beträgt. Bevorzugt weist das Ladungsaufnahmeelement eine Länge auf, die von 60 mm bis 120 mm beträgt. Die elektrisch leitfähige Materialstruktur kann eine Porenanzahl pro Zoll von mindestens 5 bis 20 Poren aufweisen. Bevorzugt weist die elektrisch leitfähige Materialstruktur eine Porenanzahl pro Zoll von mindestens 5 bis 15 Poren auf.

Bei einer Ausführungsform weist das Ladungsaufnahmeelement einen Durchmesser zwischen 10 mm und 300 mm auf. Das Ladungsaufnahmeelement kann einen Durchmesser zwischen 20 mm und 250 mm, insbesondere zwischen 30 mm und 200 mm aufweisen. Konkreter kann das Ladungsaufnahmeelement einen Durchmesser zwischen 40 mm und 150 mm, insbesondere zwischen 50 mm und 100 mm aufweisen. Besonders bevorzugt weist das Ladungsaufnahmeelement einen Durchmesser von 80 mm auf.

Besonders bevorzugt weist das Ladungsaufnahmeelement eine Länge von 120 mm und die leitfähige Materialstruktur eine Porenzahl pro Zoll von 10 Poren auf. Messungen im Rahmen von Versuchen haben ergeben, dass bei einer durchströmbaren Länge des Ladungsaufnahmeelements von 120 mm und einer Porenanzahl von 10 Poren pro Zoll, insbesondere und einem Durchmesser von 80 mm, eine Verbesserung der Ladungssituation von zirka 80 Prozent erreicht wird. Mit anderen Worten sind das Filterelement bzw. die Filterlagenoberfläche und die Flüssigkeit aufgrund eines solchen Ladungsaufnahmeelements um 80 Prozent geringer aufgeladen. Dadurch bildet sich nur ein geringes elektrisches Feld aus, welches auf umliegende Elektronikkomponenten einen vernachlässigbaren Einfluss hat und diese somit nicht stört.

Bei einer (alternativen) Ausführungsform weist das Ladungsaufnahmeelement wenigstens einen Strömungskanal mit wenigstens einem Oberflächenabschnitt, insbesondere einem der Vielzahl von Oberflächenabschnitten, auf, der im Betrieb elektrische Ladungen von der geladenen Flüssigkeit aufnimmt oder an die geladene Flüssigkeit abgibt. Die aufgeladene Flüssigkeit fließt im Betrieb durch den wenigstens einen Strömungskanal und kontaktiert den wenigstens einen Oberflächenabschnitt, um Ladungen aufzunehmen bzw. abzugeben. Der Strömungskanal kann wenigstens ein, insbesondere mehrere, Richtungsänderungen aufweisen, um die Verweil- und Kontaktzeit der Flüssigkeit an den Oberflächenabschnitten zu erhöhen.

Das Ladungsaufnahmeelement kann ein solides Bauteil sein, in das der Strömungskanal integriert ist. Das Ladungsaufnahmeelement kann mehrere Strömungskanäle aufweisen. Diese können miteinander teilweise verbunden oder voneinander separiert in dem Ladungsaufnahmeelement ausgebildet sein. Diese Ausführungsform stellt eine weitere vorteilhafte Möglichkeit dar, die aufgeladene Flüssigkeit auf einem verlängerten Strömungsweg durch das Ladungsaufnahmeelement zu leiten, um einen effizienten Ladungsausgleich zu realisieren.

Das Ladungsaufnahmeelement besteht vorzugsweise zumindest teilweise aus wenigstens einem elektrisch leitfähigen Metallwerkstoff. Alternativ oder zusätzlich kann das Ladungsaufnahmeelement zumindest teilweise aus einem elektrisch leitfähigen Kunststoffmaterial gebildet sein. Die Materialstruktur und/oder der Strömungskanal können einen leitenden Metallwerkstoff oder ein leitendes Kunststoffmaterial umfassen.

Besonders bevorzugt ist das Ladungsaufnahmeelement mit dem Filterelement mittelbar oder unmittelbar elektrisch gekoppelt. Bei der mittelbaren Kopplung kann das Ladungsaufnahmeelement durch ein leitfähiges Verbindungsteil mit dem Filterelement, insbesondere einer leitfähigen Komponente des Filterelements, derart elektrisch verbunden sein, dass Betrieb ein Ladungsausgleich zwischen der Flüssigkeit und der Filterlagenoberfläche stattfindet. Das leitfähige Verbindungsteil kann ein separates Bauteil sein, das mit dem Ladungsaufnahmeelement und dem Filterelement leitend verbunden ist. Es ist möglich, dass das leitfähig Verbindungsteil Bestandteil bspw. wenigstens einer leitfähigen Endscheibe ist, die mit der Filterlage elektrisch gekoppelt ist. Hier ist von Vorteil, dass das Ladungsaufnahmeelement von dem Filterelement flexibel, d.h. beispielsweise von dem Filterelement entfernt, positionierbar ist.

Bei der unmittelbaren Kopplung kann das Ladungsaufnahmeelement mit der Filterlage des Filterelements derart in direktem Kontakt stehen, dass ein Ladungsausgleich zwischen der aufgeladenen Filterlagenoberfläche und der aufgeladenen Flüssigkeit stattfindet. Das Ladungsaufnahmeelement kann dazu an der Filterlage abschnittsweise anliegen. Hier ist vorteilhaft, dass ein zusätzliches Bauteil eingespart wird.

Bei einer bevorzugten Ausführungsform sind das Ladungsaufnahmeelement und/oder das Filterelement erdungsfrei. Besonders bevorzugt sind das Ladungsaufnahmeelement und das Filterelement erdungsfrei. Dies bedeutet, dass das Filterelement und das Ladungsaufnahmeelement derart miteinander verbunden sind, dass ein Ausgleich der Ladungstrennung an der Filterlagenoberfläche innerhalb der erfindungsgemäßen Anordnung erfolgt. Keines der beiden Elemente ist mit einer externen Masse verbunden, welche die Ladungstrennung ausgleichen könnte. Der Ladungsausgleich erfolgt vorzugsweise ausschließlich zwischen der Flüssigkeit und der Filterlagenoberfläche. Dies hat den Vorteil, dass ein maximaler Potentialunterschied besteht und somit ein möglichst effizienter Ladungsausgleich erfolgt.

Bei einer Ausführungsform ist das Ladungsaufnahmeelement in Strömungsrichtung außerhalb des Filterelements angeordnet, wobei das Ladungsaufnahmeelement an dem Filterelement befestigt ist. Mit anderen Worten ist das Ladungsaufnahmeelement in Strömungsrichtung nach dem Filterelement, d.h. nach einer Flüssigkeitsaustrittsöffnung des Filterelements, angeordnet. Das Ladungsaufnahmeelement ist bspw. an dem Filterelement direkt oder indirekt angebracht. Im eingebauten Zustand der Anordnung übernimmt das Filterelement eine Haltefunktion für das Ladungsaufnahmeelement. Dies hat den Vorteil, dass bspw. bei dem Einsatz der Anordnung in einem Filtergehäuse kein Anschluss an dem Filtergehäuse vorgesehen werden muss, um das Ladungsaufnahmeelement auf Position zu halten.

Vorzugsweise umfasst die erfindungsgemäße Anordnung wenigstens eine Halteeinrichtung mit wenigstens einer Durchflussöffnung, wobei das Ladungsaufnahmeelement in der Halteeinrichtung angeordnet ist und die Halteeinrichtung mit einer Endescheibe des Filterelements verbunden ist. Die Halteeinrichtung umfasst bevorzugt einen Haltekorb, in dem das Ladungsaufnahmeelement aufgenommen ist. Die Halteeinrichtung kann an der Endscheibe lösbar befestigt sein. Die Halteeinrichtung kann mit der Endscheibe formschlüssig und/oder kraftschlüssig verbunden sein. Die Durchflussöffnung dient als Austrittsöffnung für die entladene Flüssigkeit nach dem Durchströmen des Ladungsaufnahmeelements. Hier ist vorteilhaft, dass die Befestigung der Halteeinrichtung an der Endscheibe einfach und kostengünstig zu realisieren ist.

Die Halteeinrichtung kann einen in Längsrichtung der Halteeinrichtung zumindest teilweise geschlossen Umfang aufweisen. Die Durchflussöffnung bildet einen Durchgang durch den Umfang der Halteeinrichtung. Die Durchflussöffnung kann in Längsrichtung der Halteeinrichtung im Bereich eines ersten Endes der Halteeinrichtung ausgebildet sein. Das erste Ende ist ein von dem Filterelement abgewandtes Ende der Haltereinrichtung. Die Durchflussöffnung ist vorzugsweise in einer an das erste Ende angrenzenden Längshälfte der Haltevorrichtung angeordnet. Bevorzugt weist die Halteeinrichtung mehrere über den Umfang verteilte Durchflussöffnungen auf. Hier ist vorteilhaft, dass die aufgeladene Flüssigkeit nicht gleich am Eintritt in das Ladungsaufnahmeelement aus diesem austritt, sondern in der zweiten Längshälfte der Halteeinrichtung. Dies wirkt sich aufgrund der erhöhten Verweilzeit der Flüssigkeit in dem Ladungsaufnahmeelementvorteilhaft auf den Ladungsausgleich aus.

Bei einer weiteren Ausführungsform weist das Filterelement in Längsrichtung eine zentrale Durchflussöffnung auf, in der das Ladungsaufnahmeelement zumindest abschnittsweise angeordnet ist. Mit anderen Worten ist das Filterelement vorzugsweise hohlzylindrisch, wobei im Inneren das Ladungsaufnahmeelement angeordnet ist. In diesem Fall wird das Filterelement von außen nach innen von der Flüssigkeit durchströmt, sodass die aufgeladene Flüssigkeit durch das Ladungsaufnahmeelement geleitet wird. Diese Ausführungsform stellt eine kompakte Bauform der Anordnung dar, da das Ladungsaufnahmeelement ist in die zentrale Durchflussöffnung des Filterelements zumindest abschnittsweise integriert ist.

Bei einer weiteren Ausführungsform ist das Ladungsaufnahmeelement an dem Filterelement zumindest abschnittsweise außenumlaufend angeordnet. Mit anderen Worten kann das Ladungsaufnahmeelement in Umfangsrichtung an dem Filterelement außen angeordnet sein. Oftmals ist im eingebauten Zustand der Anordnung zwischen Filterelement und einer Innenwandung eines Filtergehäuses ein Ringspalt vorgesehen. In diesem Ringspalt kann beispielsweise das Ladungsaufnahmeelement angeordnet sein. In diesem Fall wird das Filterelement von innen nach außen von der Flüssigkeit durchströmt, sodass die aufgeladene Flüssigkeit durch das Ladungsaufnahmeelement geleitet wird. Hier ist ebenfalls von Vorteil, dass die Anordnung kompakt aufgebaut ist. Zusätzliche Halterungen bspw. an einer Endscheibe oder dergleichen können entfallen.

Die erfindungsgemäße Anordnung kann wenigstens ein Stützelement, insbesondere eine Lochzarge, aufweisen, wobei das Stützelement das Filterelement abströmseitig abstützt. Das Stützelement ist hierbei vorzugsweise durch das Ladungsaufnahmeelement gebildet. Mit anderen Worten kann das Ladungsaufnahmeelement einen die Filterlage abstützenden Bereich aufweisen. Dadurch kann ein separates Stützelement entfallen, sodass Kosten eingespart werden. Insbesondere kann bei dieser Ausführungsform das Ladungsaufnahmeelement in die zentrale Durchflussöffnung des Filterelements integriert sein.

Nach einem nebengeordneten Aspekt betrifft die Erfindung eine Filtereinrichtung zur Filtration einer Flüssigkeit, insbesondere von Hydrauliköl, mit einer erfindungsgemäßen Anordnung, und einem Filtergehäuse, insbesondere einem Filtertopf, in dem das Filterelement austauschbar angeordnet ist, wobei das Ladungsaufnahmeelement in oder an dem Filtergehäuse angeordnet ist. Hierbei wird auf die im Zusammenhang mit der Anordnung erläuterten Vorteile verwiesen. Darüber hinaus kann die Filtereinrichtung alternativ oder zusätzlich einzelne oder eine Kombination mehrerer zuvor in Bezug auf die Anordnung genannter Merkmale aufweisen.

Das Filtergehäuse kann wenigstens einen Gehäuseabschnitt mit einer Ausströmöffnung für die filtrierte bzw. aufgeladene Flüssigkeit aufweisen, an dem das Ladungsaufnahmeelement angeordnet ist. Die Filtereinrichtung kann wenigstens eine Halteeinrichtung, insbesondere ein Haltekorb, aufweisen, in der das Ladungsaufnahmeelement zumindest abschnittsweise angeordnet ist, wobei die Halteeinrichtung an dem Gehäuseabschnitt befestigt ist. Der Gehäuseabschnitt kann eine Formschlussgeometrie umfassen, über die die Halteeinrichtung mit dem Filtergehäuse lösbar formschlüssig verbindbar ist. Zusätzlich oder alternativ kann die Halteeinrichtung mit dem Gehäuseabschnitt kraftschlüssig, insbesondere verschraubt sein. Hier ist vorteilhaft, dass das Ladungsaufnahmeelement unabhängig von dem Filterelement an dem Filtergehäuse angeordnet ist. Das Ladungsaufnahmeelement kann von dem Filterelement baulich getrennt sein. Das Filtergehäuse umfasst bei dieser Ausführungsform die notwendige Aufnahme, um die Halteeinrichtung zu fixieren. Das Filterelement als solches kann hierdurch eine vereinfacht sein, da Haltegeometrien bspw. an eine Endscheibe entfallen. Des Weiteren ist die Zugänglichkeit zur Montage bzw. Demontage erleichtert.

Bei einer Ausführungsform der erfindungsgemäßen Filtereinrichtung weist das Filtergehäuse wenigstens einen Zwischenraum auf, der zwischen einer Innenwand des Filtergehäuses und einem Außenumfang des Filterelements ausgebildet ist, wobei das Ladungsaufnahmeelement in dem Zwischenraum angeordnet ist. Der Zwischenraum kann ein Ringraum sein. Bei dieser Ausführungsform wird das Filterelement von innen nach außen durchströmt. Das Ladungsaufnahmeelement kann hohlzylindrisch sein. Die Filtereinrichtung weist hierdurch eine kompakte Bauform auf.

Nach einem weiteren nebengeordneten Aspekt betrifft die Erfindung ein Tanksystem mit wenigstens einem Behälter für eine Flüssigkeit, insbesondere Hydrauliköl, wenigstens einer erfindungsgemäßen Anordnung und/oder wenigstens einer erfindungsgemäßen Filtereinrichtung, wobei die Filtereinrichtung und/oder die Anordnung an dem Behälter derart vorgesehen ist/sind, dass im Betrieb die filtrierte Flüssigkeit in den Behälter strömt. Durch die erfindungsgemäße Anordnung bzw. Filtereinrichtung ist die filtrierte Flüssigkeit in dem Behälter geringfügig aufgeladen oder sogar ganz entladen. Dadurch wird ein elektrisches Feld nur mit geringer Stärke aufgebaut, sodass der Einfluss des elektrischen Feldes auf umliegende Elektronikkomponenten gering ist. Im besten Fall bildet sich kein elektrisches Feld aus.

Bei einer Ausführungsform des erfindungsgemäßen Tanksystems füllt das Ladungsaufnahmeelement den Innenraum des Behälters zumindest teilweise aus, wobei das Ladungsaufnahmeelement von der Filtereinrichtung und/oder von dem Filterelement baulich getrennt ist. Das Ladungsaufnahmeelement ist vorzugsweise in dem Innenraum des Behälters von der Filtereinrichtung beabstandet. Das Ladungsaufnahmeelement kann an einem Behälterboden angeordnet sein, wobei sich die Ausströmöffnung der Filtereinrichtung oberhalb des Ladungsaufnahmeelements befindet. Unabhängig von der Einbaulage der Filtereinrichtung ist das Ladungsaufnahmeelement nach der Ausströmöffnung der Filtereinrichtung angeordnet, sodass im Betrieb die filtrierte und aufgeladene Flüssigkeit durch das Ladungsaufnahmeelement strömt. Es ist möglich, dass das Ladungsaufnahmeelement den Innenraum des Behälters im Wesentlichen vollständig ausfüllt. Konkret wäre denkbar, dass der Innenraum des Behälters ausgeschäumt ist, wobei das ausgeschäumte Volumen das Ladungsaufnahmeelement bildet. Hier ist von Vorteil, dass das Filterelement sowie das Filtergehäuse einfach und kostengünstig ausgestaltet werden, da entsprechende Haltegeometrien zum Halten des Ladungsaufnahmeelements entfallen.

Nach einem weiteren nebengeordneten Aspekt betrifft die Erfindung ein Verfahren zum Ladungsausgleich zwischen einem Filterelement und einer Flüssigkeit, insbesondere von Hydrauliköl, bei dem eine Anordnung, insbesondere eine erfindungsgemäße Anordnung, mit einem Filterelement zur Filtration der Flüssigkeit und wenigstens einem Ladungsaufnahmeelement zur Aufnahme elektrisch geladener Teilchen der Flüssigkeit vorgesehen ist. Das Filterelement und das Ladungsaufnahmeelement sind zumindest teilweise elektrisch leitfähig. Das Filterelement weist wenigstens eine Filterlage mit einer Filterlagenoberfläche auf. Die Filterlagenoberfläche und das Ladungsaufnahmeelement werden von der Flüssigkeit durchströmt. An der Filterlagenoberfläche erfolgt beim Durchströmen eine Ladungstrennung, wobei das Ladungsaufnahmeelement mit dem Filterelement derart elektrisch verbunden ist, dass zwischen dem Ladungsaufnahmeelement und der Filterlagenoberfläche ein Ausgleich der Ladungstrennung stattfindet. Das Ladungsaufnahmeelement ist dem Filterelement in Strömungsrichtung nachgeschaltet.

Hierbei wird auf die im Zusammenhang mit der Anordnung, der Filtereinrichtung bzw. des Tanksystems erläuterten Vorteile verwiesen. Darüber hinaus kann das Verfahren alternativ oder zusätzlich einzelne oder eine Kombination mehrerer zuvor in Bezug auf die Anordnung, die Filtereinrichtung bzw. das Tanksystem genannter Merkmale aufweisen.

Die Erfindung wird nachstehend mit weiteren Einzelheiten unter Bezug auf die beigefügten Zeichnungen näher erläutert. Die dargestellten Ausführungsformen stellen Beispiele dar, wie die erfindungsgemäße Anordnung, die erfindungsgemäße Filtereinrichtung sowie das erfindungsgemäße Tanksystem ausgestaltet sein können.

In diesen zeigen,
- Fig. 1: einen Längsschnitt durch eine Filtereinrichtung mit einer Anordnung nach einem bevorzugten erfindungsgemäßen Ausführungsbeispiel;
- Fig. 2: einen Längsschnitt durch eine Filtereinrichtung mit einer Anordnung nach einem weiteren bevorzugten erfindungsgemäßen Ausführungsbeispiel;
- Fig. 3: einen Längsschnitt durch eine Filtereinrichtung mit einer Anordnung nach einem weiteren bevorzugten erfindungsgemäßen Ausführungsbeispiel;
- Fig. 4: einen Längsschnitt durch ein schematisch dargestelltes Tanksystem nach einem erfindungsgemäßen Ausführungsbeispiel;
- Fig. 5: einen Längsschnitt durch ein schematisch dargestelltes Tanksystem nach einem weiteren erfindungsgemäßen Ausführungsbeispiel;
- Fig. 6: ein simuliertes Feldlinienbild eines Tanksystems aus dem Stand der Technik;
- Fig. 7: eine Seitenansicht von zwei Haltevorrichtungen für ein Ladungsaufnahmeelement der Filtereinrichtung nach Fig. 1;
- Fig. 8: eine Seitenansicht von drei weiteren Haltevorrichtungen für ein Ladungsaufnahmeelement der Filtereinrichtung nach Fig. 1; und
- Fig. 9: Detailansichten mit unterschiedlichen Porengrößen jeweils eines Ladungsaufnahmeelements einer Filtereinrichtung nach einem der Fig. 1 bis 3 und/oder eines Tanksystems nach Fig. 4 oder 5.

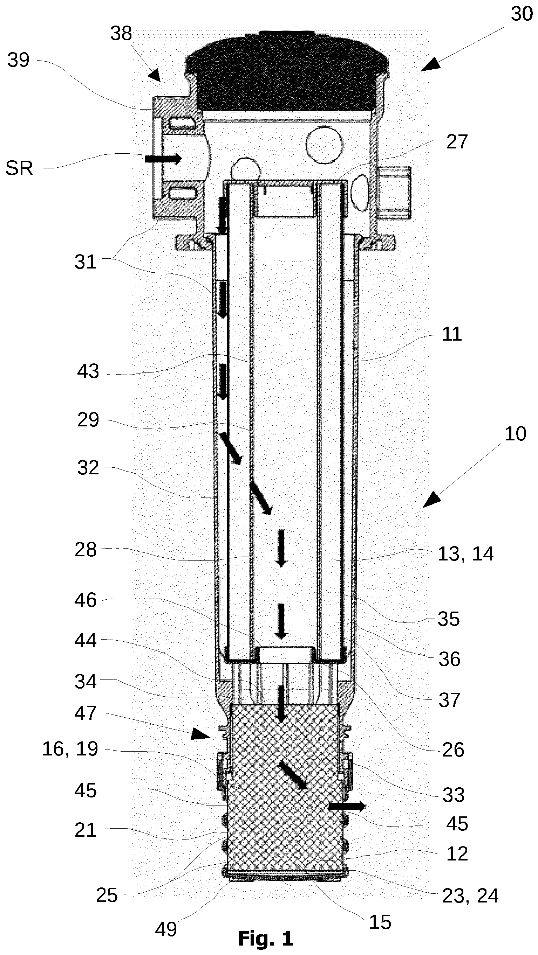

Fig. 1 bis 5 zeigen jeweils eine Filtereinrichtung 30 mit einer Anordnung 10 nach einem bevorzugten erfindungsgemäßen Ausführungsbeispiel. Die Filtereinrichtung 30 dient zur Filtration einer Flüssigkeit, das heißt zum Entfernen von Fremdstoffen aus einer Flüssigkeit. Die gemäß Fig. 1 bis 5 gezeigte Filtereinrichtung 30 kommt vorzugsweise zur Filtration von Hydrauliköl zum Einsatz. Die Filtereinrichtung 30 ist nicht auf die Filtration von Hydrauliköl eingeschränkt. Der Einsatz der Filtereinrichtung 30 zur Filtration anderer Fluide, insbesondere anderer Flüssigkeiten ist möglich. In der folgenden Beschreibung wird die Flüssigkeit generell als Hydrauliköl bezeichnet.

Die Filtereinrichtung 30 gemäß Fig. 1 bis 5 umfasst eine Anordnung 10 mit einem Filterelement 11 zur Filtration von Hydrauliköl und einem Ladungsaufnahmeelement 12 zum Aufnehmen von elektrisch geladenen Teilchen des Hydrauliköls. Das Filterelement 11 weist eine Filterlage 13 mit einer Filterlagenoberfläche 14 auf. Die Filterlage 13 ist plissiert. Mit anderen Worten ist die Filterlage 13 gefaltet. Eine derartige Ausgestaltung ist allgemein bekannt, sodass auf diese nicht weiter eingegangen wird.

Die Filterlagenoberfläche 14 und das Ladungsaufnahmeelement 12 sind von dem Hydrauliköl durchströmbar. Im Betrieb erfolgt beim Durchströmen des Hydrauliköls durch die Filterlage 13 eine Ladungstrennung an der Filterlagenoberfläche 14. Dabei laden sich die Filterlagenoberfläche 14 und das Hydrauliköl entgegengesetzt auf. Beispielsweise kann die Filterlagenoberfläche 14 negativ geladen sein, d.h. einen Elektronenüberschuss aufweisen, und das filtrierte Hydrauliköl positiv geladen sein, d.h. einen Elektronenmangel aufweisen. Es ist alternativ möglich, dass durch die Ladungstrennung die Filterlagenoberfläche 14 positiv geladen und das Hydrauliköl negativ geladen ist. Je nach entsprechender Ladung weisen die Filterlagenoberfläche 14 und das Hydrauliköl eine jeweilige entgegengesetzte Polarität auf. Ladungsträger in dem Hydrauliköl werden als Ionen bezeichnet.

Das Ladungsaufnahmeelement 12 ist in Strömungsrichtung SR dem Filterelement 11 nachgeschaltet. Das Ladungsaufnahmeelement 12 wird daher nach der Filtration von dem aufgeladenen Hydrauliköl durchströmt. Das Ladungsaufnahmeelement 12 ist mit dem Filterelement 11 derart elektrisch verbunden, dass im Betrieb zwischen dem Ladungsaufnahmeelement 12 und der Filterlagenoberfläche 14 ein Ausgleichen der Ladungstrennung stattfindet. Da die Filterlagenoberfläche 14 und das Hydrauliköl entgegengesetzt aufgeladen sind, herrscht zwischen diesen ein hoher Potentialunterschied. Auf die elektrische Verbindung wird später näher eingegangen.

Aufgrund des hohen Potentialunterschieds gibt das Hydrauliköl geladene Teilchen an das Ladungsaufnahmeelement 12 ab oder nimmt geladene Teilchen von dem Ladungsaufnahmeelement 12 auf. Dies ist abhängig von der Polarität der aufgeladenen Filterlagenoberfläche 14 und des aufgeladenen Hydrauliköls. Je nach Polarität werden diese geladenen Teilchen durch eine elektrische Verbindung zwischen dem Filterelement 11 und dem Ladungsaufnahmeelement 12 transportiert, sodass ein Ausgleichen der Ladungstrennung erfolgt. Dazu fließen zum Ausgleichen der Ladungstrennung Elektronen zwischen der Filterlagenoberfläche 14 und dem Ladungsaufnahmeelement 12. So wird die zuvor erzeugte Ladung der Filterlagenoberfläche 14 bzw. des Filterelements 11 und des Hydrauliköls rückwirkend wieder ausgeglichen. Dadurch wird die elektrostatische Aufladung der Filterlage 13 sowie des Hydrauliköls erheblich reduziert.

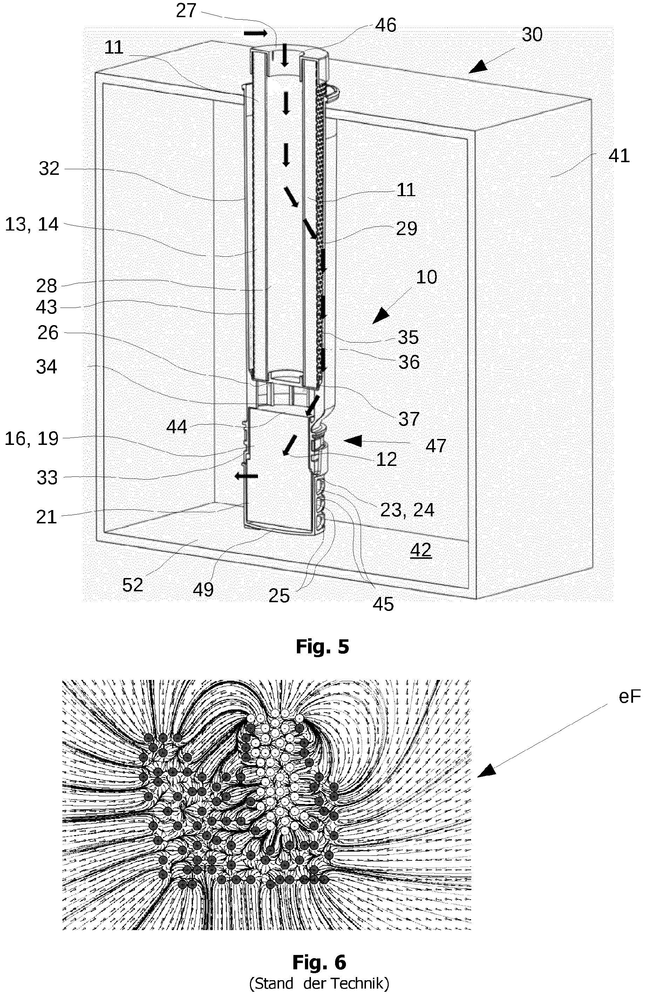

Fig. 6 stellt beispielhaft ein Feldlinienbild aus dem Stand der Technik dar, in dem simuliert wird, wie die elektrischen Ladungen in einem Hydrauliktank, an dem eine Filtereinrichtung angeordnet ist, verteilt sind. Negativ geladen ist dabei die Filtereinrichtung und positiv geladen das in dem Hydrauliktank befindliche Hydrauliköl. Es ist erkennbar, dass sich durch die Ladungsverhältnisse ein starkes elektrisches Feld eF (siehe schwarze, durchgängige Linien) ausbildet, dass bei nicht-Abschirmung des Tanks durch die Tankwand nach außen tritt. Dadurch werden umliegende Elektronikkomponenten negativ beeinflusst oder sogar zerstört. Durch die Filtereinrichtung 30 bzw. das Tanksystem 40 gemäß den Fig. 1 bis 5 ist dieses Problem behoben.

Wie in den Fig. 1 bis 5 ersichtlich, weist die Filtereinrichtung 30 ein Filtergehäuse 31 mit einem Filtertopf 32 und einem Filterkopf 38 auf. Der Filterkopf 38 umfasst einen Anschluss 39, durch den im Betrieb Hydrauliköl in die Filtereinrichtung 30 eintritt. Der Filterkopf 38 ist mit dem Filtertopf 32 dicht verbunden. Bevorzugt ist der Filtertopf 32 in den Filterkopf 38 eingehängt. Der Filterkopf 38 und der Filtertopf 32 können miteinander verschraubt sein.

Das Filterelement 11 ist in dem Filtergehäuse 31 austauschbar angeordnet. Ein Großteil des Filterelement 11 ist dabei im Filtertopf 32 angeordnet. Das Filterelement 11 weist, wie vorstehend beschrieben, die Filterlage 13 auf. Zusätzlich umfasst das Filterelement 11 zwei Endscheiben 26, 27, in die die Filterlage 13 mit dessen Stirnseiten einsitzt. Die Endscheiben 26, 27 sind an den beiden Stirnseiten der Filterlage 13 in Längsrichtung des Filterelements 11 einander gegenüber angeordnet. Dabei ist die dem Filterkopf 38 zugewandte Endscheibe 27 bei der Filtereinrichtung 30 gemäß Fig. 1, 2 und 4 geschlossen und die gegenüber angeordnete Endscheibe 26 offen ausgebildet. Die Filterlagen 13 der Filterelemente 11 gemäß Fig. 1, 2 und 4 werden im Betrieb von außen nach innen durchströmt.

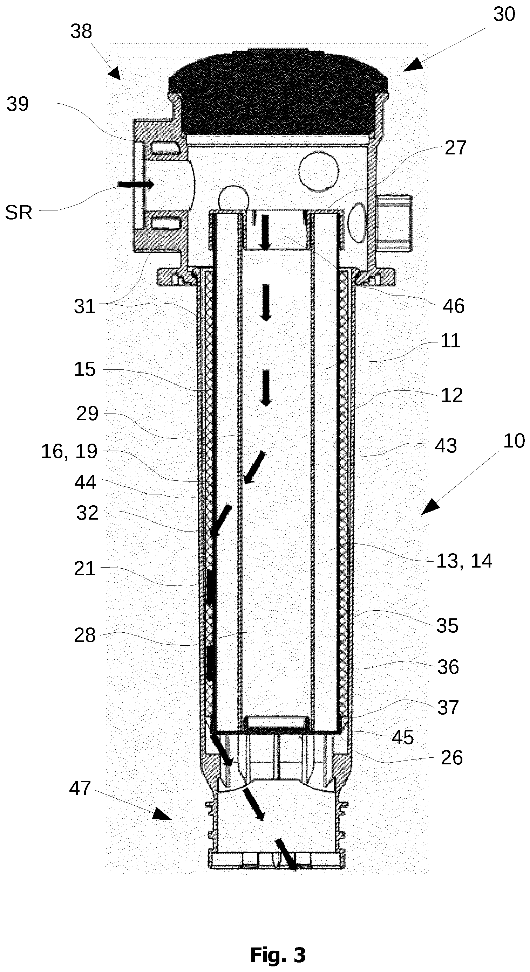

Die Endscheibe 27 der Filtereinrichtung gemäß Fig. 3 und 5 ist hingegen offen und die gegenüber angeordnete Endscheibe 26 geschlossen ausgebildet. Die Durchströmung der Filterlage 13 des Filterelements 11 erfolgt im Betrieb von innen nach außen. Die Strömungsrichtung SR ist in den Fig. 1 bis 4 durch schwarze Pfeile gekennzeichnet.

Das Filterelement 11 weist einen radial innenliegende zentrale Durchflussöffnung 28 auf. Die zentrale Durchflussöffnung 28 verläuft im Wesentlichen über die gesamte Länge des Filterelements 11. Des Weiteren weist das Filterelement 11 ein Stützelement 29 auf, das an einer Abströmseite 43 der Filterlage 13 angeordnet ist. Das Stützelement 29 stützt die Filterlage 13 gegen die Strömungsrichtung SR des Hydrauliköls ab. Das Stützelement 29 weist eine Vielzahl an Durchgängen auf, sodass das Hydrauliköl hindurchströmen kann. Das Stützelement 29 ist bei dem Filterelement 11 gemäß Fig. 1 bis 5 eine Lochzarge. Andere Ausgestaltungen des Stützelements 29 sind möglich.

Im Folgenden wird auf das Ladungsaufnahmeelement 12 näher eingegangen, das in den Fig. 1 bis 5 als kreuzschraffierter Körper dargestellt ist. Das jeweilige Ladungsaufnahmeelement 12 der Filtereinrichtungen 30 gemäß Fig. 1 bis 5 ist vollständig elektrisch leitfähig. Das Ladungsaufnahmeelement 12 ist mit dem Filterelement 11 derart elektrisch gekoppelt, dass ein Ladungsausgleich zwischen dem Hydrauliköl und der Filterlagenoberfläche 14 stattfindet.

Das Ladungsaufnahmeelement 12 dient zum Aufnehmen von Ladungen aus der dem Hydrauliköl und/oder zum Abgeben von Ladungen an das Hydrauliköl. Das Ladungsaufnahmeelement 12 bildet somit wenigstens ein Mittel zur Ladungsübertragung. Das Ladungsaufnahmeelement 12 wird im Betrieb von dem Hydrauliköl in Strömungsrichtung SR nach dem Filterelement 11 durchströmt. Wie in den Fig. 1 bis 5 zu sehen ist, ist das Ladungsaufnahmeelement 12 in Strömungsrichtung SR nach dem Stützelement 29 angeordnet. Auf die genaue Lage des Ladungsaufnahmeelement 12 bei den Filtereinrichtungen 30 gemäß Fig. 1 bis 5 wird später eingegangen.

Das Ladungsaufnahmeelement 12 umfasst einen Eintritts- und einen Austrittsbereich 44, 45 für das filtrierte Hydrauliköl. Das Ladungsaufnahmeelement 12 ist so ausgebildet, dass mehrere Strömungswege zwischen dem Eintrittsbereich 44 und dem Austrittsbereich 45 vorgesehen sind. Die Strömungswege weisen jeweils eine Länge auf, die länger als ein kürzester Strömungsweg zwischen dem Eintritts- und Austrittsbereich 44, 45 ist. Mit anderen Worten ist das Ladungsaufnahmeelement 12 so ausgebildet, dass mehrere Strömungswege zwischen dem Eintritts- und Austrittsbereich 44, 45 in Bezug auf einen minimalen Strömungsweg zwischen dem Eintritts- und Austrittsbereich 44, 45 verlängert ist.

Das Ladungsaufnahmeelement 12 weist eine dreidimensionale Form auf. Das Ladungsaufnahmeelement 12 weist konkret eine elektrisch leitfähige Materialstruktur 16 auf, die eine dreidimensionale Matrixstruktur 19 umfasst. Die elektrische leitfähige Materialstruktur 16 weist eine Vielzahl von Oberflächenabschnitten 15 auf, die das Hydrauliköl beim Durchströmen kontaktiert. Die Oberflächenabschnitte 15 bilden somit Kontaktflächen für das Hydrauliköl, um Ladungen von dem Hydrauliköl aufzunehmen oder Ladungen an das Hydrauliköl abzugeben. Die Oberflächenabschnitte 15, insbesondere die Kontaktflächen sind elektrisch leitfähig.

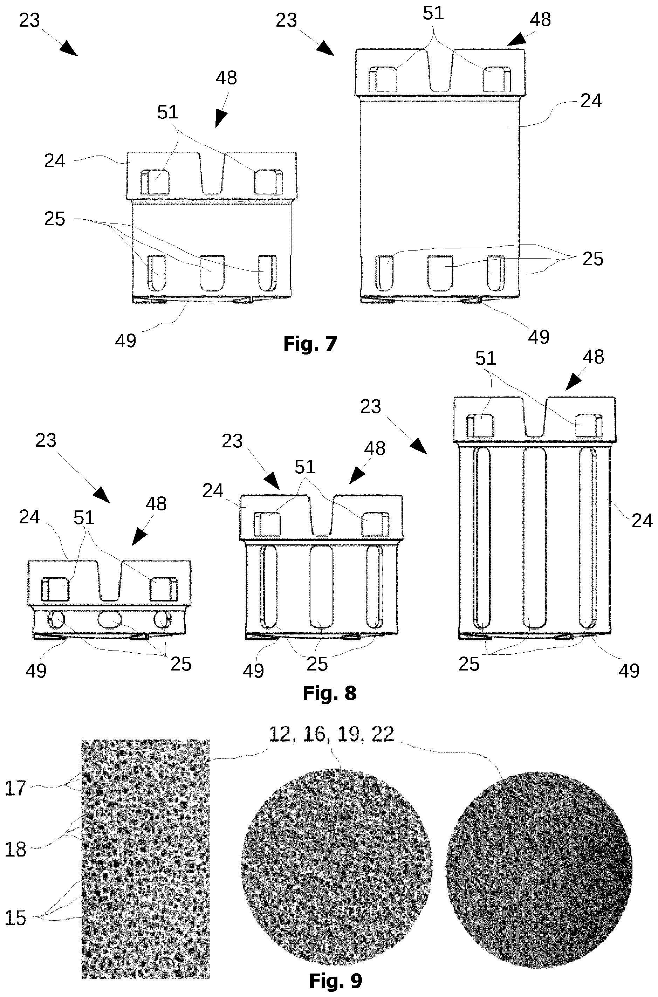

Die elektrisch leitfähige Materialstruktur 16 kann aus einem elektrisch leitfähigen Metallwerkstoff und/oder aus einem elektrisch leitfähigen Kunststoffmaterial bestehen. Das elektrisch leitfähige Materialstruktur 16 kann durch ein leitfähiges offenporiges Schaumelement 22 gebildet sein. Das Schaumelement 22 kann ein Metallschaum 22 oder ein Kunststoffschaum sein. Es ist möglich, dass die elektrisch leitfähige Materialstruktur 16 durch mehrere, insbesondere wenigstens zwei, Schaumelemente 22 gebildet ist, die aneinander angrenzend angeordnet sind. Fig. 9 zeigt exemplarisch drei Detailbilder von Schaumelementen 22 mit unterschiedlichen Porenanzahlen pro Zoll. Hier ist erkennbar, dass die Schaumelemente Zellen 17 mit Zellenstegen 18 aufweisen. Die Zellenstege 18 umfassen dabei die Oberflächenabschnitte 15, an die je nach Polarität das Hydrauliköl Ladungen abgibt oder Ladungen von dieser aufnimmt.

Bei dem Einsatz eines oder mehrere Schaumelemente weisen diese bevorzugt weist eine Porenanzahl pro Zoll von mindestens 5 bis 30 Poren, besonders bevorzugt von 10 Poren auf.

Alternativ kann die elektrisch leitfähige Materialstruktur 16 durch ein dreidimensionales Gitter oder ein dreidimensionales Gewebe gebildet sein. Das dreidimensionale Gewebe kann aus einer Vielzahl von aufeinanderliegenden Gewebelagen gebildet sein. Dabei sind die Fäden des Gewebes elektrisch leitfähig. Die elektrisch leitfähige Materialstruktur 16 mittels 3D-Druck, insbesondere durch Sinter-3D-Druck, hergestellt sein. Zusammenfassend kann die elektrisch leitfähige Materialstruktur 16 aufgeschäumt, offenporig, porös, gitterartig, gewebeartig, maschenartig, geflechtartig ausgebildet sein oder aus einer oder mehreren Kombinationen daraus ausgebildet sein.

Bei jeder der genannten Varianten, d.h. bei dem Schaumelement, dem Gitter und dem Gewebe, sind die vorstehend beschriebenen Strömungswege bzw. die Oberflächenabschnitte 15 vorgesehen.

Die leitfähige Materialstruktur 16 befindet sich zwischen dem Eintritts- und Austrittsbereich 44, 45 des Ladungsaufnahmeelements 12. Damit sind auch die Strömungswege, insbesondere die Oberflächenabschnitte 15, zwischen dem Eintritts- und Austrittsbereich 44, 45 angeordnet.

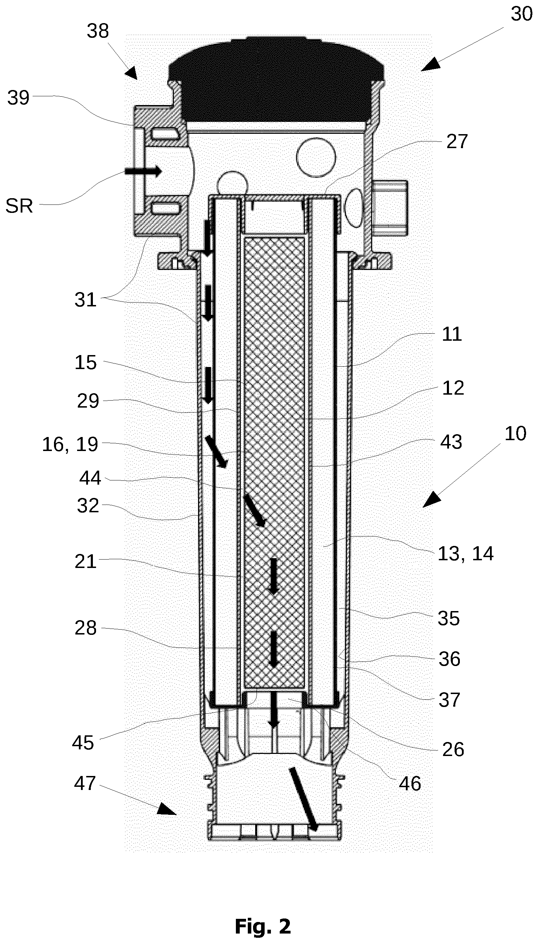

Wie aus den Fig. 1 bis 5 hervorgeht, sind der Eintritts- und Austrittsbereich 44, 45 in ihrer Lage voneinander winkelversetzt. Konkret ist bei dem Ladungsaufnahmeelement 12 gemäß Fig. 1, 4 und 5 in Einbaulage der Eintrittsbereich 44 oben und der Austrittsbereich 45 seitlich angeordnet. Bei den Ladungsaufnahmeelementen 12 gemäß Fig. 2 und 3 ist der Eintrittsbereich 44 in Einbaulage jeweils seitlich und der Austrittsbereich 45 unten angeordnet. Selbstverständlich sind andere Lagen des Eintritts- und Austrittsbereichs 44, 45 möglich.

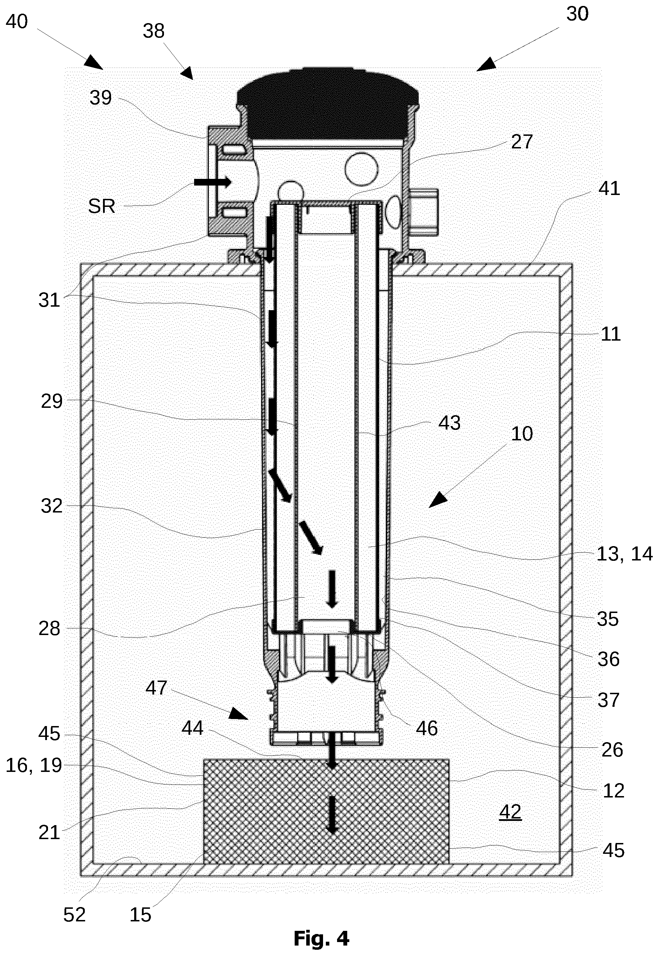

Gemäß den Fig. 1 bis 5 weisen die Ladungsaufnahmeelemente 12 je nach Position eine unterschiedliche Form und Größe auf. Generell weisen die Ladungsaufnahmeelemente 12 jeweils eine dreidimensionale Außenkontur 21 auf. Beispielsweise ist das Ladungsaufnahmeelement 12 gemäß Fig. 1, 2 und 5 vollzylindrisch ausgebildet. Diese unterscheiden sich lediglich im Durchmesser und in der Länge. Gemäß Fig. 3 ist das Ladungsaufnahmeelement 12 hohlzylindrisch ausgebildet. Das Ladungsaufnahmeelement 12 gemäß Fig. 4 kann vollzylindrisch oder quaderförmig ausgebildet sein. Andere Volumenformen der Ladungsaufnahmeelemente 12 sind möglich. Generell können die Ladungsaufnahmeelement 12 jeweils eine Länge zwischen 20 und 250 mm aufweisen.

Bei den Filtereinrichtung 30 gemäß Fig. 1 bis 5 ist das Ladungsaufnahmeelement 12 ein von dem Filterelement 11 baulich getrenntes Element. Mit anderen Worten ist das Ladungsaufnahmeelement 12 von dem Filterelement 11 unabhängig angeordnet. Das Ladungsaufnahmeelement 12 ist also von dem Filterelement 11 separiert. Wie in den Fig. 1 bis 5 zu erkennen ist, ist das Ladungsaufnahmeelement 12 in Strömungsrichtung SR nach dem Stützelement 29 des Filterelements 11 angeordnet. Bei den Filtereinrichtungen 30 gemäß Fig. 1 bis 5 ist somit das Ladungsaufnahmeelement 12 auch von dem Stützelement 29 baulich getrennt. Dies schließt allerdings nicht aus, dass das Ladungsaufnahmeelement 12, wie bspw. in Fig. 2 oder 3, an dem Stützelement 29 anliegen kann.

Gemäß den Fig. 1 und 5 ist das Ladungsaufnahmeelement 12 außerhalb des Filterelements 11 angeordnet. Fig. 1 zeigt dabei die Filtereinrichtung 30 als solche und Fig. 5 ein Tanksystem 40 mit einer Filtereinrichtung 30, die bis auf die Durchströmrichtung der Filtereinrichtung gemäß Fig. 1 gleicht. Wie in Fig. 5 ersichtlich, ragt die Filtereinrichtung 30 in den Behälter 41 ein, sodass der Filtertopf 32 im Betrieb teilweise in Hydrauliköl steht. Zur einfacheren Darstellung ist in Fig. 5 der Filterkopf 38 ausgeblendet.

Konkret ist das Ladungsaufnahmeelement 12 in Strömungsrichtung SR nach der Endscheibe 26 des Filterelements 11 angeordnet. Das Ladungsaufnahmeelement 12 weist von der Endscheibe 26 einen Abstand auf. Das Ladungsaufnahmeelement 12 ist konkret in Längsrichtung des Filtereinrichtung 30, insbesondere des Filtertopfs 32, von der Endscheibe 26 beabstandet. Die Endscheibe 26 weist eine Öffnung 46 auf, durch die das geladene Hydrauliköl aus dem Filterelement 11 austritt und anschließend durch den Eintrittsbereich 44 in die elektrisch leitfähige Materialstruktur 16 des Ladungsaufnahmeelements 12 eintritt.

Der Filtertopf 32 der Filtereinrichtung 30 weist einen Gehäuseabschnitt 33 mit einer Ausströmöffnung 34 auf. Das Ladungsaufnahmeelement 12 ist teilweise in dem Gehäuseabschnitt 33 angeordnet. Der Gehäuseabschnitt 33 bildet ein freies Ende 47 des Filtertopfs 32. Der Gehäuseabschnitt 33 umfasst an einem Außenumfang eine Formschlussgeometrie zum Verbinden mit einer Halteeinrichtung 23. Konkret umfasst die Filtereinrichtung 30 eine Halteeinrichtung 23, die mit dem Gehäuseabschnitt 33 verbindbar ist. Im verbundenen Zustand hält die Halteeinrichtung 23 das Ladungsaufnahmeelement 12 an dem Gehäuseabschnitt 33. Die Halteeinrichtung 23 weist eine Gegengeometrie zur Formschlussgeometrie des Gehäuseabschnitts 33 auf. Die Halteeinrichtung 23 ist somit mit dem Gehäuseabschnitt 33 formschlüssig verbindbar. Die Halteeinrichtung 23 kann mittels Bajonettverschluss an dem Gehäuseabschnitt 33 befestigt werden. Alternativ kann die Halteeinrichtung 23 an den Gehäuseabschnitt 33 verschraubt werden. Zusätzlich oder alternativ ist eine Schnappverbindung zwischen der Halteeinrichtung 23 und dem Gehäuseabschnitt 33 möglich. Fig. 1 und 5 zeigen den verbundenen Zustand der Halteeinrichtung 23 und des Gehäuseabschnitts 33.

Gemäß den Fig. 7 und 8 sind Beispiele für die Ausgestaltung der Halteeinrichtung 23 gezeigt. Hier ist gut zu erkennen, dass die Halteeinrichtung 23 ein Haltekorb 24 ist, in dem das Ladungsaufnahmeelement 12 zumindest teilweise angeordnet ist. Es ist möglich, dass das Ladungsaufnahmeelement 12 in dem Haltekorb 24 vollständig angeordnet sein kann. Ferner ist erkennbar, dass beiden Haltekörbe 24 gemäß Fig. 7 und 8 unterscheiden sich lediglich in ihrer Gesamtlänge sowie der Länge von Durchflussöffnungen 25. Beispielsweise kann gemäß Fig. 7 der links dargestellte Haltekorb 24 ein Ladungsaufnahmeelement 12 von 60 mm Länge aufnehmen und der rechts dargestellte Haltekorb 24 ein Ladungsaufnahmeelement 12 von 120 mm Länge aufnehmen. In Fig. 8 trifft dies auf den mittleren und den rechten Haltekorb 24 zu. Der links dargestellte Haltekorb 24 gemäß Fig. 8 kann ein Ladungsaufnahmeelement 12 von 20 mm Länge aufnehmen.

Die Haltekörbe 24 weisen ein offenes Ende 48 und ein geschlossenes Ende 49 auf, die einander in Längsrichtung gegenüberliegen. Das offene Ende 48 ist im verbunden Zustand dem Gehäuseabschnitt 33 des Filtertopfs 32 zugewandt. Das geschlossene Ende 49 ist im verbundenen Zustand von dem Gehäuseabschnitt 33 des Filtertopfs 32 abgewandt.

An dem offenen Ende 48 weisen die Haltekörbe 24 mehrere auf dem Außenumfang verteilte Durchgänge 51 auf, die zur formschlüssigen Verbindung mit dem Gehäuseabschnitt 33 dienen. Die Durchgänge 51 entsprechen der vorstehend genannten Gegengeometrie.

Ferner weisen die Haltekörbe 24 mehrere auf einem Außenumfang verteilte Durchflussöffnungen 25, durch die das entladene Hydrauliköl im Betrieb aus dem Ladungsaufnahmeelement 12 austritt.

Die Durchflussöffnungen 25 gemäß Fig. 7 sind in Längsrichtung des Haltekorbs 24 im Bereich des geschlossenen Endes 49 ausgebildet. Die Durchflussöffnungen 25 sind in einer an das geschlossene Ende 49 angrenzenden Längshälfte des Haltekorbs 24 angeordnet. Im Unterschied zu Fig. 7 weisen die Haltekörbe 24 mehrere auf einem Außenumfang verteilte Durchflussöffnungen 25 auf, die im Wesentlichen über die gesamte Länge der Haltekörbe 24 verlaufen. Konkret verlaufen die Durchflussöffnungen 25 zwischen der Gegengeometrie und dem geschlossenen Ende 49 der Haltekörbe 24. Die Durchflussöffnungen 25 gemäß Fig. 7 und 8 sind langlochartig ausgebildet. Andere Formen sind möglich.

Gemäß Fig. 2 ist das Ladungsaufnahmeelement 12 in eine zentrale Durchflussöffnung 28 des Filterelements 11 integriert. Konkret ist das Ladungsaufnahmeelement 12 in dem Stützelement 29 des Filterelements 11 angeordnet. Das Ladungsaufnahmeelement 12 ist zwischen den beiden Endscheiben 26, 27 des Filterelements 11 angeordnet.

Bei der Filtereinrichtung 30 gemäß Fig. 3 ist das Ladungsaufnahmeelement 12 in einem Zwischenraum 35 angeordnet, der zwischen einer Innenwand 36 des Filtertopfs und einem Außenumfang 37 des Filterelements 11 gebildet ist. Das Ladungsaufnahmeelement 12 ist hier am Außenumfang des Filterelements 11, konkret an einem Außenumfang des Stützelements 29 angeordnet.

Gemäß Fig. 4 ist ein Tanksystem 40 dargestellt, das einen Behälter 41 und eine Filtereinrichtung 30 umfasst. Im Unterschied zu den Filtereinrichtungen 30 gemäß Fig. 1, 2, 3 und 5 ist das Ladungsaufnahmeelement 12 bei der Filtereinrichtung 30 gemäß Fig. 4 außerhalb des Filtergehäuses 31 angeordnet. Konkret ist das Ladungsaufnahmeelement 12 außerhalb des Filtertopfs 32 angeordnet. Wie in Fig. 4 ersichtlich, ragt die Filtereinrichtung 30 in den Behälter 41 ein, sodass der Filtertopf 32 im Betrieb teilweise in dem Hydrauliköl steht. Das Ladungsaufnahmeelement 12 ist an einem Boden 52 des Behälters 41 angeordnet. Das Ladungsaufnahmeelement 12 ist dabei vollständig in einem Innenraum 42 des Behälters 41 angeordnet. Das Ladungsaufnahmeelement 12 ist in Einbaulage des Behälters 41 unterhalb einer Ausströmöffnung 34 des Filtertopfs 32 angeordnet. Der Eintrittsbereich 44 des Ladungsaufnahmeelements 12 ist von der Ausströmöffnung 34 beabstandet. Alternativ kann der Eintrittsbereich 44 des Ladungsaufnahmeelements 12 an dem Filtertopf 32 im Bereich der Ausströmöffnung 34 außen anliegen.

Wie vorstehend beschrieben, ist das Filterelement 11 mit dem Ladungsaufnahmeelement 12 elektrisch verbunden, um einen Ladungsausgleich zwischen dem Hydrauliköl und der Filterlagenoberfläche 14 durchzuführen. Die elektrische Verbindung ist in den Fig. 1 bis 5 nicht dargestellt. Die Filterlage 13 des Filterelements 11 kann nicht-leitfähig oder leitfähig sein. Die Filterlage 13 und somit die Filterlagenoberfläche 14 ist mit dem Ladungsausgleichselement 12 elektrisch leitend verbunden. Dies kann über einen direkten Kontakt zwischen der Filterlage 13 und dem Ladungsaufnahmeelement 12 oder indirekt über ein leitfähiges Element, wie bspw. eine leitfähige Endscheibe 26, 27, ein leitfähiges Stützelement 29 oder ein separates leitfähiges Bauteil erfolgen. Das separate leitfähige Bauteil kann bspw. eine elektrische Leitung sein. Andere leitfähige Mittel zur elektrischen Verbindung der Filterlage 13 und des Ladungsaufnahmeelements 12 sind möglich.

### Bezugszeichenliste

- 10: Anordnung
- 11: Filterelement
- 12: Ladungsaufnahmeelement
- 13: Filterlage
- 14: Filterlagenoberfläche
- 15: Oberflächenabschnitt
- 16: elektrisch leitfähige Materialstruktur
- 17: Zellen
- 18: Zellenstege
- 19: dreidimensionale Matrixstruktur
- 21: dreidimensionale Außenkontur
- 22: offenporiger Schaum
- 23: Halteeinrichtung
- 24: Haltekorb
- 25: Durchflussöffnung
- 26, 27: Endscheiben
- 28: zentrale Durchflussöffnung
- 29: Stützelement
- 30: Filtereinrichtung
- 31: Filtergehäuse
- 32: Filtertopf
- 33: Gehäuseabschnitt
- 34: Ausströmöffnung
- 35: Zwischenraum
- 36: Innenwand des Filtergehäuses
- 37: Außenumfang
- 38: Filterkopf
- 39: Anschluss
- 40: Tanksystem
- 41: Behälter
- 42: Innenraum des Behälters
- 43: Abströmseite
- 44: Eintrittsbereich
- 45: Austrittsbereich
- 46: Öffnung der Endscheibe
- 47: freies Ende des Filtertopfs
- 48: offenes Ende
- 49: geschlossenes Ende
- 51: Durchgang
- 52: Boden
- SR: Strömungsrichtung

## Patentansprüche

1. Anordnung (10) mit einem Filterelement zur Filtration einer Flüssigkeit, insbesondere von Hydrauliköl, und wenigstens einem Ladungsaufnahmeelement (12) zur Aufnahme elektrisch geladener Teilchen der Flüssigkeit, wobei das Filterelement (11) und das Ladungsaufnahmeelement (12) elektrisch leitfähig sind, und das Filterelement (11) wenigstens eine Filterlage (13) mit einer Filterlagenoberfläche (14) aufweist, wobei die Filterlagenoberfläche (14) und das Ladungsaufnahmeelement (12) von der Flüssigkeit durchströmbar sind und an der Filterlagenoberfläche (14) beim Durchströmen eine Ladungstrennung erfolgt, wobei
das Ladungsaufnahmeelement (12) mit dem Filterelement (11) derart elektrisch verbunden ist, dass im Betrieb zwischen dem Ladungsaufnahmeelement (12) und der Filterlagenoberfläche (14) ein Ausgleich der Ladungstrennung stattfindet, wobei das Ladungsaufnahmeelement (12) dem Filterelement (11) in Strömungsrichtung nachgeschaltet ist,
**dadurch gekennzeichnet, dass**
das Ladungsaufnahmeelement (12) wenigstens eine elektrisch leitfähige Materialstruktur (16) aufweist, die aus einer Vielzahl von in Strömungsrichtung zumindest abschnittsweise aufeinanderfolgenden Zellen (17) gebildet ist.

2. Anordnung (10) nach Anspruch 1,
**dadurch gekennzeichnet, dass**
das Ladungsaufnahmeelement (12) eine Vielzahl von Oberflächenabschnitten (15) aufweist, die im Betrieb die elektrisch geladenen Teilchen aufnehmen, wobei die Oberflächenabschnitte (15) in Strömungsrichtung zumindest abschnittsweise aufeinanderfolgend angeordnet sind und/oder die Zellen (17) mehrere Zellenstege (18) aufweisen, die jeweils wenigstens einen Oberflächenabschnitt (15), insbesondere wenigstens einen der Vielzahl von Oberflächenabschnitten (15), aufweisen, der im Betrieb die elektrisch geladenen Teilchen aufnimmt.

3. Anordnung (10) nach Anspruch 1 oder 2,
**dadurch gekennzeichnet, dass**
die elektrisch leitfähige Materialstruktur (16) eine dreidimensionale Matrixstruktur (19) ist und/oder das Ladungsaufnahmeelement (12) eine dreidimensionale Außenkontur (21) aufweist, die wenigstens einen durchströmbaren Innenraum begrenzt, der durch die elektrisch leitfähige Materialstruktur (16) zum Aufnehmen von elektrisch geladenen Teilchen zumindest teilweise, insbesondere vollständig, ausgefüllt ist.

4. Anordnung (10) nach einem der vorhergehenden Ansprüche,
**dadurch gekennzeichnet, dass**
das Ladungsaufnahmeelement (12) eine Länge aufweist, die von 20 mm bis 250 mm, insbesondere von 60 mm bis 120 mm, beträgt und/oder die elektrisch leitfähige Materialstruktur (16) eine Porenanzahl pro Zoll von mindestens 5 bis 30 Poren aufweist und/oder das Ladungsaufnahmeelement (12), insbesondere die elektrisch leitfähige Materialstruktur (16), aus wenigstens einem dreidimensionalen Gewebe, und/oder wenigstens einem dreidimensionalen Gitter und/oder wenigstens einem offenporigen Schaum (22), insbesondere Kunststoffschaum oder Metallschaum, und/oder einem 3D-Druck-Material gebildet ist.

5. Anordnung (10) nach einem der vorhergehenden Ansprüche, insbesondere nach einem der Ansprüche 2 bis 4,
**dadurch gekennzeichnet, dass**
das Ladungsaufnahmeelement (12) wenigstens einen Strömungskanal mit wenigstens einem Oberflächenabschnitt, insbesondere einem der Vielzahl von Oberflächenabschnitten (15), aufweist, der im Betrieb die elektrisch geladenen Teilchen aufnimmt und/oder das Ladungsaufnahmeelement (12), insbesondere die Materialstruktur (16) und/oder der Strömungskanal, zumindest teilweise aus wenigstens einem elektrisch leitfähigen Metallwerkstoff und/oder zumindest teilweise aus einem elektrisch leitfähigen Kunststoffmaterial besteht.

6. Anordnung (10) nach einem der vorhergehenden Ansprüche,
**dadurch gekennzeichnet, dass**
das Ladungsaufnahmeelement (12) mit dem Filterelement (11) mittelbar oder unmittelbar elektrisch gekoppelt ist und/oder das Ladungsaufnahmeelement (12) und/oder das Filterelement (11) erdungsfrei sind.

7. Anordnung (10) nach einem der vorhergehenden Ansprüche,
**dadurch gekennzeichnet, dass**
das Ladungsaufnahmeelement (12) in Strömungsrichtung außerhalb des Filterelements (11) angeordnet ist, wobei das Ladungsaufnahmeelement (12) an dem Filterelement (11) befestigt ist.

8. Anordnung (10) nach einem der vorhergehenden Ansprüche,
**gekennzeichnet durch,**
wenigstens eine Halteeinrichtung (23), insbesondere einen Haltekorb (24), mit wenigstens einer Durchflussöffnung (25), wobei das Ladungsaufnahmeelement (12) in der Halteeinrichtung (23) angeordnet ist und die Halteeinrichtung (23) mit einer Endscheibe (26) des Filterelements (11) verbunden ist, wobei insbesondere die Halteeinrichtung (23) einen Umfang aufweist, der in Längsrichtung der Halteeinrichtung (23) zumindest teilweise geschlossen ist.

9. Anordnung (10) nach einem der Ansprüche 1 bis 6,
**dadurch gekennzeichnet, dass**
das Filterelement (11) in Längsrichtung eine zentrale Durchflussöffnung (28) aufweist, in der das Ladungsaufnahmeelement (12) zumindest abschnittsweise angeordnet ist und/oder das Ladungsaufnahmeelement (12) an dem Filterelement (11) zumindest abschnittsweise außenumlaufend angeordnet ist und/oder wenigstens ein Stützelement, insbesondere eine Lochzarge, vorgesehen ist, das das Filterelement abströmseitig abstützt, wobei das Stützelement durch das Ladungsaufnahmeelement gebildet ist.

10. Filtereinrichtung (30) zur Filtration einer Flüssigkeit, insbesondere von Hydrauliköl, mit einer Anordnung (10) nach einem der vorhergehenden Ansprüche, und einem Filtergehäuse, insbesondere einem Filtertopf (32), in dem das Filterelement (11) austauschbar angeordnet ist, wobei das Ladungsaufnahmeelement (12) in oder an dem Filtergehäuse (31) angeordnet ist.

11. Filtereinrichtung (30) nach Anspruch 10,
**dadurch gekennzeichnet, dass**
das Filtergehäuse (31) wenigstens einen Gehäuseabschnitt (33) mit einer Ausströmöffnung (34) für die filtrierte Flüssigkeit aufweist, an dem das Ladungsaufnahmeelement (12) zur Aufnahme elektrisch geladener Teilchen aus der Flüssigkeit angeordnet ist und/oder das Filtergehäuse (31) wenigstens einen Zwischenraum (35) aufweist, der zwischen einer Innenwand (36) des Filtergehäuses (31) und einem Außenumfang (37) des Filterelements (11) ausgebildet ist, wobei das Ladungsaufnahmeelement (12) in dem Zwischenraum (35) angeordnet ist.

12. Filtereinrichtung (30) nach Anspruch 10 oder 11,
**dadurch gekennzeichnet, dass**
wenigstens eine Halteeinrichtung (23), insbesondere ein Haltekorb (24), vorgesehen ist, in der das Ladungsaufnahmeelement (12) zumindest abschnittsweise angeordnet ist, wobei die Halteeinrichtung (23) an dem Gehäuseabschnitt (33) befestigt ist.

13. Tanksystem (40) mit wenigstens einem Behälter (41) für eine Flüssigkeit, insbesondere Hydrauliköl, wenigstens einer Anordnung (10) nach einem der Ansprüche 1 bis 9 und/oder wenigstens einer Filtereinrichtung (30) nach einem der Ansprüche 10 bis 12, wobei die Filtereinrichtung (30) und/oder die Anordnung an dem Behälter (41) derart vorgesehen ist/sind, dass im Betrieb die filtrierte Flüssigkeit in den Behälter (41) strömt.

14. Tanksystem (40) nach Anspruch 13,
**dadurch gekennzeichnet, dass**
das Ladungsaufnahmeelement (12) den Innenraum (42) des Behälters (41) zumindest teilweise ausfüllt, wobei das Ladungsaufnahmeelement (12) von der Filtereinrichtung (30) und/oder von dem Filterelement (11) baulich getrennt ist.

15. Verfahren zum Ladungsausgleich zwischen einem Filterelement (11) und einer Flüssigkeit, insbesondere von Hydrauliköl, bei dem eine Anordnung (10) nach einem der Ansprüche 1 bis 9 vorgesehen ist, wobei die Filterlagenoberfläche (14) der wenigstens einen Filterlage (13) und das Ladungsaufnahmeelement (12) von der Flüssigkeit durchströmt werden und an der Filterlagenoberfläche (14) beim Durchströmen eine Ladungstrennung erfolgt, wobei das Ladungsaufnahmeelement (12) mit dem Filterelement (11) derart elektrisch verbunden ist, dass zwischen dem Ladungsaufnahmeelement (12) und der Filterlagenoberfläche (14) ein Ausgleich der Ladungstrennung stattfindet, wobei das Ladungsaufnahmeelement (12) dem Filterelement (11) in Strömungsrichtung nachgeschaltet ist.

## Claims

1. An arrangement (10)with a filter element for filtering a liquid, in particular hydraulic oil, and at least one charge absorption element (12) for receiving electrically charged particles from the liquid, wherein the filter element (11) and the charge absorption element (12) are electrically conductive, and the filter element (11) has at least one filter layer (13) with a filter layer surface (14), wherein the filter layer surface (14) and the charge absorption element (12) can be passed through by a flow of the liquid, and charge separation takes place at the filter layer surface (14) as the liquid flows through, wherein
the charge absorption element (12) is electrically connected to the filter element (11) in such a manner that an equalisation of the charge separation takes place between the charge absorption element (12) and the filter layer surface (14) during operation, wherein the charge absorption element (12) is connected downstream of the filter element (11) in the direction of flow,
**characterised in that**
the charge absorption element (12) has at least one electrically conductive material structure (16) which is formed from a plurality of cells (17) following one another, at least in portions, in the direction of flow.

2. The arrangement (10) according to claim 1,
**characterised in that**
the charge absorption element (12) comprises a plurality of surface portions (15) which receive the electrically charged particles during operation, wherein the surface portions (15) are arranged in succession, at least in portions, in the direction of flow, and/or the cells (17) have a plurality of cell webs (18), each of which has at least one surface portion (15), in particular at least one of the plurality of surface portions (15) which receives the electrically charged particles during operation.

3. The arrangement (10) according to claim 1 or 2,
**characterised in that**
the electrically conductive material structure (16) has a three-dimensional matrix structure (19) and/or the charge absorption element (12) has a three-dimensional outer contour (21) which defines at least one interior space through which a flow can pass and which is at least partially, and in particular completely, filled by the electrically conductive material structure (16) for receiving electrically charged particles.

4. The arrangement (10) according to any one of the preceding claims, **characterised in that**
the charge absorption element (12) has a length ranging from 20 mm to 250 mm, in particular from 60 mm to 120 mm, and/or the electrically conductive material structure (16) has a pore count per inch of at least 5 to 30 pores, and/or the charge absorption element (12), in particular the electrically conductive material structure (16), is formed from at least one three-dimensional fabric, and/or at least one three-dimensional grid, and/or at least one open-pored foam (22), in particular plastics foam or metal foam, and/or a 3D printing material.

5. The arrangement (10) according to any one of the preceding claims, in particular according to any one of claims 2 to 4,
**characterised in that**
the charge absorption element (12) has at least one flow channel with at least one surface portion, in particular one of a plurality of surface portions (15) which receives the electrically charged particles during operation, and/or the charge absorption element (12), in particular the material structure (16), and/or the flow channel, consists at least partially of at least one electrically conductive metal material and/or at least partially of an electrically conductive plastics material.

6. The arrangement (10) according to any one of the preceding claims,
**characterised in that**
the charge absorption element (12) is directly or indirectly electrically coupled to the filter element (11), and/or the charge absorption element (12) and/or the filter element (11) are floating.

7. The arrangement (10) according to any one of the preceding claims,
**characterised in that**
the charge absorption element (12) is arranged outside the filter element (11) in the flow direction, wherein the charge absorption element (12) is secured to the filter element (11).

8. The arrangement (10) according to any one of the preceding claims,
**characterised by**
at least one holding device (23), in particular a holding basket (24) having at least one flow opening (25), wherein the charge absorption element (12) is arranged in the holding device (23), and the holding device (23) is connected to an end plate (26) of the filter element (11), wherein in particular the holding device (23) has a periphery which is at least partially closed in a longitudinal direction of the holding device (23).

9. The arrangement (10) according to any one of claims 1 to 6,
**characterised in that**
the filter element (11) has a central flow opening (28) in a longitudinal direction in which the charge absorption element (12) is arranged at least in portions, and/or the charge absorption element (12) is arranged around an outside of the filter element (11) at least in portions, and/or at least one support element, in particular a perforated frame, is provided which supports the filter element on the downstream side, wherein the support element is formed by the charge absorption element.

10. A filter device (30) for filtering a liquid, in particular hydraulic oil, comprising an arrangement (10) according to any one of the preceding claims, and a filter housing, in particular a filter bowl (32), in which the filter element (11) is arranged in a replaceable manner, wherein the charge absorption element (12) is arranged in or on the filter housing (31).

11. The filter device (30) according to claim 10,
**characterised in that**
the filter housing (31) has at least one housing portion (33) with an outlet opening (34) for the filtered liquid, at which housing portion the charge absorption element (12) for receiving electrically charged particles from the liquid is arranged, and/or the filter housing (31) has at least one intermediate space (35) formed between an inner wall (36) of the filter housing (31) and an outer periphery (37) of the filter element (11), wherein the charge absorption element (12) is arranged in the intermediate space (35).

12. The filter device (30) according to claim 10 or 11,
**characterised in that**
at least one holding device (23), in particular a holding basket (24), is provided, in which the charge absorption element (12) is arranged at least in portions, wherein the holding device (23) is secured to the housing section (33).

13. A tank system (40), comprising at least one container (41) for a liquid, in particular hydraulic oil, at least one arrangement (10) according to any one of claims 1 to 9, and/or at least one filter device (30) according to any one of claims 10 to 12, wherein the filter device (30) and/or the arrangement are/is provided on the container (41) in such a manner that the filtered liquid flows into the container (41) during operation.

14. The tank system (40) according to claim 13,
**characterised in that**
the charge absorption element (12) at least partially fills the interior space (42) of the container (41), wherein the charge absorption element (12) is structurally separate from the filter device (30) and/or from the filter element (11).

15. A method for charge equalisation between a filter element (11) and a liquid, in particular hydraulic oil, in which an arrangement (10) according to any one of claims 1 to 9 is provided, wherein the filter layer surface (14) of the at least one filter layer (13) and the charge absorption element (12) are passed through by a flow of the liquid, and charge separation takes place at the filter layer surface (14) as the liquid flows through, wherein the charge absorption element (12) is electrically connected to the filter element (11) in such a manner that equalisation of the charge separation takes place between the charge absorption element (12) and the filter layer surface (14), wherein the charge absorption element (12) is connected downstream of the filter element (11) in the direction of flow.

## Revendications

1. Agencement (10) avec un élément filtrant pour le filtrage d'un liquide, en particulier d'huile hydraulique et au moins un élément d'absorption de charge (12) pour absorber des particules électriquement chargées présentes dans le liquide, sachant que l'élément filtrant (11) et l'élément d'absorption de charge (12) sont électroconducteurs et l'élément filtrant (11) comporte au moins une couche filtrante (13) avec une surface de couche filtrante (14), sachant que la surface de couche filtrante (14) et l'élément d'absorption de charge (12) peuvent être traversés par le liquide et une séparation de charge a lieu à la surface de couche filtrante (14) lors de la traversée, sachant que
l'élément d'absorption de charge (12) est relié électriquement à l'élément filtrant (11) de telle manière qu'en fonctionnement un équilibrage de la séparation de charge a lieu entre l'élément d'absorption de charge (12) et la surface de couche filtrante (14), sachant que l'élément d'absorption de charge (12) est monté en aval de l'élément filtrant (11) dans le sens d'écoulement,
**caractérisé en ce que**
l'élément d'absorption de charge (12) comporte au moins une structure de matériau électroconductrice (16), qui est formée d'une pluralité de cellules (17) successives au moins par endroits dans le sens d'écoulement.

2. Agencement (10) selon la revendication 1,
**caractérisé en ce que**
l'élément d'absorption de charge (12) comporte une pluralité de sections de surface (15), qui absorbent en fonctionnement les particules électriquement chargées sachant que les sections de surface (15) sont disposées au moins par endroits les unes derrière les autres dans le sens d'écoulement et/ou les cellules (17) comportent plusieurs nervures cellulaires (18), qui comportent respectivement au moins une section de surface (15), en particulier au moins une de la pluralité de sections de surface (15), qui absorbe en fonctionnement les particules électriquement chargées.

3. Agencement (10) selon la revendication 1 ou 2,
**caractérisé en ce que**
la structure de matériau électroconductrice (16) est une structure matricielle tridimensionnelle (19) et/ou l'élément d'absorption de charge (12) comporte un contour extérieur tridimensionnel (21), qui délimite au moins un espace intérieur pouvant être traversé, qui est rempli au moins en partie, en particulier complètement, par une structure de matériau électroconductrice (16) pour absorber des particules électriquement chargées.

4. Agencement (10) selon l'une quelconque des revendications précédentes,
**caractérisé en ce que**
l'élément d'absorption de charge (12) comporte une longueur qui est de 20 mm à 250 mm, en particulier de 60 mm à 120 mm, et/ou la structure de matériau électroconductrice (16) comporte un nombre de pores par pouce d'au moins 5 à 30 pores et/ou l'élément d'absorption de charge (12), en particulier la structure de matériau électroconductrice (16) est formée d'au moins un tissu tridimensionnel, et/ou d'au moins un treillis tridimensionnel et/ou d'au moins une mousse à pores ouverts (22), en particulier d'une mousse de matière plastique ou d'une mousse métallique, et/ou d'un matériau comprimé tridimensionnel.

5. Agencement (10) selon l'une quelconque des revendications précédentes, en particulier selon l'une quelconque des revendications 2 à 4
**caractérisé en ce que**
l'élément d'absorption de charge (12) comporte au moins un conduit d'écoulement avec au moins une section de surface, en particulier une de la pluralité de sections de surface (15), qui absorbe en fonctionnement les particules électriquement chargées et/ou l'élément d'absorption de charge (12), en particulier la structure de matériau électroconductrice (16) et/ou le conduit d'écoulement, est composé au moins en partie d'au moins un matériau métallique électroconducteur et/ou au moins en partie d'un matériau de matière plastique électroconducteur.

6. Agencement (10) selon l'une quelconque des revendications précédentes,
**caractérisé en ce que**
l'élément d'absorption de charge (12) est indirectement ou directement couplé électriquement à l'élément filtrant (11), et/ou l'élément d'absorption de charge (12) et/ou l'élément filtrant (11) sont sans mise à la terre.

7. Agencement (10) selon l'une quelconque des revendications précédentes,
**caractérisé en ce que**
l'élément d'absorption de charge (12) est disposé dans le sens d'écoulement en dehors de l'élément filtrant (11), sachant que l'élément d'absorption de charge (12) est fixé à l'élément filtrant (11).

8. Agencement (10) selon l'une quelconque des revendications précédentes,
**caractérisé par**
au moins un dispositif de maintien (23), en particulier une crépine de maintien (24), avec au moins une ouverture de passage (25), sachant que l'élément d'absorption de charge (12) est disposé dans le dispositif de maintien (23) et le dispositif de maintien (23) est relié à un flasque terminal (26) de l'élément filtrant (11), sachant en particulier que le dispositif de maintien (23) comporte une périphérie, qui est au moins en partie fermée dans le sens longitudinal du dispositif de maintien (23).

9. Agencement (10) selon l'une quelconque des revendications 1 à 6,
**caractérisé en ce que**
l'élément filtrant (11) comporte dans le sens longitudinal une ouverture de passage centrale (28) dans laquelle est disposée au moins par endroits l'élément d'absorption de charge (12) et/ou l'élément d'absorption de charge (12) est disposé au moins par endroits en périphérie extérieure sur l'élément filtrant (11) et/ou au moins un élément de soutien, en particulier un cadre perforé est prévu, qui soutient du côté écoulement l'élément filtrant, sachant que l'élément de soutien est formé par l'élément d'absorption de charge.

10. Dispositif de filtration (30) pour le filtrage d'un liquide, en particulier d'huile hydraulique, avec un agencement (10) selon l'une quelconque des revendications précédentes, et un boîtier de filtre, en particulier une cuve de filtre (32), dans laquelle est disposé l'élément filtrant (11) pouvant être changé, sachant que l'élément d'absorption de charge (12) est disposé dans ou sur le boîtier de filtre (31).

11. Dispositif de filtration (30) selon la revendication 10,
**caractérisé en ce que**
le boîtier de filtre (31) comporte au moins une section de boîtier (33) avec une ouverture d'écoulement (34) pour le liquide filtré sur laquelle l'élément d'absorption de charge (12) est disposé pour absorber les particules électriquement chargées du liquide, et/ou le boîtier de filtre (31) comporte au moins un espace intermédiaire (35), qui est constitué entre une paroi intérieure (36) du boîtier de filtre (31) et une périphérie extérieure (37) de l'élément filtrant (11), sachant que l'élément d'absorption de charge (12) est disposé dans l'espace intermédiaire (35).

12. Dispositif de filtration (30) selon la revendication 10 ou 11, **caractérisé en ce qu'**
au moins un dispositif de maintien (23), en particulier une crépine de maintien (24), est prévu dans lequel est disposé au moins par endroits l'élément d'absorption de charge (12), sachant que le dispositif de maintien (23) est fixé à la section de boîtier (33).

13. Système de réservoir (40) avec au moins un conteneur (41) pour un liquide, en particulier de l'huile hydraulique, au moins un agencement (10) selon l'une quelconque des revendications 1 à 9 et/ou au moins un dispositif de filtration (30) selon l'une quelconque des revendications 10 à 12, sachant que le dispositif de filtration (30) et/ou l'agencement est/sont prévu(s) sur le conteneur (41) de telle manière qu'en fonctionnement le liquide filtré s'écoule dans le conteneur (41).

14. Système de réservoir (40) selon la revendication 13,
**caractérisé en ce que**
l'élément d'absorption de charge (12) remplit au moins en partie l'espace intérieur (42) du conteneur (41), sachant que l'élément d'absorption de charge (12) est séparé du point de vue construction du dispositif de filtration (30) et/ou de l'élément filtrant (11).

15. Procédé d'équilibrage de charge entre un élément filtrant (11) et un liquide, en particulier d'huile hydraulique, pour lequel un agencement (10) selon l'une quelconque des revendications 1 à 9 est prévu, sachant que la surface de couche filtrante (14) d'au moins une couche filtrante (13) et l'élément d'absorption de charge (12) sont traversés par le liquide et une séparation de charge a lieu à la surface de couche filtrante (14) lors de la traversée, sachant que l'élément d'absorption de charge (12) est électriquement relié à l'élément filtrant (11) de telle manière qu'un équilibrage de la séparation de charge a lieu entre l'élément d'absorption de charge (12) et la surface de couche filtrante (14), sachant que l'élément d'absorption de charge (12) est monté en aval de l'élément filtrant (11) dans le sens d'écoulement.
